# EUROPEAN PATENT APPLICATION

(11) **EP 1 722 320 A1**
(43) Date of publication of application: **15.11.2006**
(21) Application number: 06008438.1
(22) Date of filing: 24.04.2006
(51) Int. Cl.: G06Q 10/00

(54) **Method and apparatus for making a production plan of recycled material and products utilizing recycled material**

(30) Priority: 27.04.2005 JP 2005130097
(71) Applicant: HITACHI, LTD., Chiyoda-ku Tokyo 100-8280 (JP)
(72) Inventor: Ichinohe, Masayuki, Tokyo 100-8220 (JP); Hiroshige, Yuzo, Tokyo 100-8220 (JP)
(74) Representative: Strehl Schübel-Hopf & Partner

(57) **Abstract**

According to a lower limit value of the recycling ratio of collected used products in a storage (40), constitution of raw materials of collected used products in a storage (41), constitution of products utilizing recycled materials in a storage (42), a lower limit value of a recycled material utilization ratio (β) in a storage (43), a predicted supply amount of raw materials to a recycle process (6) in a storage (45), and a production plan of products utilizing recycled materials of a production process (1) in a storage (46), a calculation module (48) creates a production plan of recycled materials in a recycle process (6) to minimize the total of a before-recycle stock in the recycle process and a before-production stock in the production process. Using the production plan of recycled materials, the calculation module (48) obtains a change plan of a recycled material utilization ratio (β) to create a production plan of products utilizing recycled materials in the production process.

## Description

### BACKGROUND OF THE INVENTION

The present invention relates to a method of making a production plan of recycled materials and products utilizing recycled materials, and in particular, to a method of making a production plan of recycled materials and products utilizing recycled materials when a lower limit value is determined for the ratio of recycling of collected used products.

Attention has been increasingly drawn to the environment and the recycle these days, and the environmental problem is an issue to be solved by the entire society. To solve the problem, there can be considered two points of view as below.

First, the recycling of used or old products is enhanced to reduce the amount of waste materials. For this purpose, it is required in the designing stage to select materials which can be easily recycled. Also, a need exists to explore a technique to recycle used products. As a known index to judge the recycle level, there has been used the ratio of recycling to indicate a ratio of recyclable materials to the overall materials of the used products.

Second, to reduce the amount of used or consumed natural resources, the use of recycled materials and parts is promoted in the production stage. It is required for this purpose to elongate the life of reusable parts. This additionally required development of a technique to evaluate performance of recycled materials to thereby select therefrom reusable parts and sections. As a known index to judge the level of the technique, there has been used a recycled material utilization ratio indicating the ratio of recycled materials used in a target product.

As for the method of making a production plan of recycled materials and products utilizing recycled materials, there exists a conventional technique. According to the technique, to observe the recycled material utilization ratio, there is created a disassembly plan to possibly reduce the amount of disassembly jobs for used products while satisfying a predetermined recycled material utilization ratio for target products. There is also created a production plan of products which is consistent with the disassembly plan and which leads to a minimum value of the sum of necessary costs. Reference is to be made to, for example, JP-A-2004-326639.

According to the technique described in JP-A-2004-326639, there are made a disassembly plan and a production plan required to observe the recycled material utilization ratio. Therefore, the technique does not guarantee that the recycle side can observe the ratio of recycling.

On the other hand, in the electric house appliance industry, there exists a movement in which the present recycling ratio regulation value ranging from 50% to 60% is changed up to at least 80% during a period from about 2006, five years after enactment of the law requiring the recycling of home electric appliances, to about 2008.

For a higher ratio of recycling, it is necessary to promote the recycling of materials of plastics only part of which are recycled at present. For this purpose, it is required to ensure users of the recycle plastics. As for one of the most promising candidates of the users for a member of the electric house appliance industry, use of recycle plastics in the own production line can be considered. However, the sales amount of electric home appliances are attended with a seasonal variation. For large-sized electric home appliances, the sales amount is associated with replacement demand thereof. This directly relates to a seasonal variation in the amount of collection of used electric appliances.

In contrast therewith, a period of lead time exists between the processes of the production, the sales, the collection, and the recycle. There hence appears discrepancy in time between the production peak associated with the seasonal variation and the production peak of recycled materials. Due to the discrepancy, the stock of recycled materials in the peak production thereof is required to be stored in a warehouse, resulting in a tremendous volume of stock. This causes occurrence of a heavy load of costs such as a warehouse charge.

### SUMMARY OF THE INVENTION

It is therefore an object of the present invention, which has been devised to solve the problem, to provide a method of and an apparatus for making a production plan of recycled materials and a production plan of products utilizing recycled materials capable of possibly reducing the amount of the stock taking place when it is desired to observe the ratio of recycling on the recycle side.

To achieve the object according to the present invention, there is provided a method of making a production plan of recycled materials in a recycle process in which raw materials of collected used products supplied from a collection/disassembly process are recycled in the case that a lower limit value of a ratio of recycling indicating a ratio of raw materials to be recycled as recycled materials to the raw materials of collected used products is determined in advance. The method includes the step of making a production plan of the recycled materials in which a recycled material amount of recycled materials produced in the recycle process is equal for each month to either one of a disassembly amount of the collected used products disassembled in the collection/disassembly process and a planed production quantity of products utilizing recycled materials in a production process or between the disassembly amount of the collected used products and the planed production quantity.

In the method of making a production plan of recycled materials, the recycled material amount of the recycle process is equal for each month to the production quantity of products utilizing recycled materials in the production process.

Also, in the method of making a production plan of recycled materials, the disassembly amount of the collected used products disassembled in the collection/disassembly process is a supply amount of raw materials which should be loaded by products utilizing recycled materials, the supply amount of raw materials being obtained from a predicted supply amount of raw materials supplied from the collection/disassembly process to the recycle process. The supply amount has a ratio to the predicted supply amount, the ratio being determined by the lower limit value of the ratio of recycling.

To achieve the object according to the present invention, there is provided a method of making a production plan of recycled materials in a recycle process in which raw materials of collected used products supplied from a collection/disassembly process are recycled in the case that a lower limit value of a ratio of recycling indicating a ratio of raw materials to be recycled as recycled materials to the raw materials of collected used products is determined in advance. The method includes a first calculation step of calculating a monthly stock amount of raw materials before recycle in the recycle process, a second calculation step of calculating a monthly stock amount of recycled materials before use for recycled materials reuse products in a production process of the recycled materials reuse products, a third calculation step of calculating a monthly stock amount of raw materials before use for the recycled materials reuse products in the production process when the collection/disassembly process is directly coupled with the production process, and a plan making step of making a plan of monthly production quantity of recycled materials in the recycle process in which none of the monthly stock amount of raw materials obtained in the first calculation step and the monthly stock amount of recycled materials obtained in the second calculation step exceeds the monthly stock amount of raw materials obtained in the third calculation step. The plan made in the plan making step is the production plan of recycled materials of the recycle process.

Furthermore, in the method of making a production plan of recycled materials, the production plan made in the plan making step is a production plan in which a peak month of the recycled material amount according to the production plan is adjusted to a peak month of the production amount of the raw materials in the collection/disassembly process.

To achieve the object according to the present invention, there is provided a method of making a production plan of recycled materials in a recycle process in which a lower limit value and an upper limit value of a recycled material utilization ratio in products produced by a production process are determined in advance. The method includes a first creation step of creating a plan of a monthly production quantity of products utilizing recycled materials in the production process, a first detection step of detecting a month in which the monthly production quantity of products produced in the production process is small, a second detection step of detecting, from the months detected in the first detection step, a month in which the monthly production quantity is less than the recycled material amount of the recycle process, and a second creation step for creating a change plan of the recycled material utilization ratio. The recycled material utilization ratio is the upper limit value in the month of the production quantity detected in the second detection step and the recycled material utilization ratio being the lower limit value or between the lower limit value and the upper limit value in other than the month detected in the second detection step. The production plan of products utilizing recycled materials includes the plan of the monthly production quantity created in the first creation step and the change plan created in the second creation step.

To achieve the object according to the present invention, there is provided an apparatus for making a production plan of recycled materials. The apparatus includes a first module for storing a predetermined lower limit value of a ratio of recycling, a second module for storing raw material constitution of raw materials of collected used products, a third module for storing raw material constitution of raw materials of products utilizing recycled materials utilizing recycled materials, a fourth module for storing a lower limit value of a recycled material utilization ratio of products utilizing recycled materials utilizing recycled materials, a fifth module for calculating an allotted ratio of use of raw materials which should be loaded by the products utilizing recycled materials to observe the lower limit value of the ratio of recycling, by use of the lower limit value of the ratio of recycling in the first module, the raw material constitution of raw materials of collected used products in the second module, the raw material constitution of raw materials of products utilizing recycled materials in the third module, and the lower limit value of the recycled material utilization ratio in the fourth module, a sixth module for storing the allotted ratio of use of raw materials obtained in the fifth module, a seventh module for storing a predicted supply amount of raw materials to a recycle process, an eighth module for storing a production plan of the products utilizing recycled materials in a production process, a ninth module for calculating a production plan of the recycle process by use of a supply amount of raw materials which should be loaded by the products utilizing recycled materials obtained by multiplying the predicted supply amount of the raw materials stored in the seventh module by the allotted ratio of use of raw materials stored in the sixth module and the production plan of products utilizing recycled materials, the production plan thus calculated minimizing a total of a stock of raw materials before recycle in the recycle process and a stock of recycled materials before the recycled materials are used for the products utilizing recycled materials in the production process, a tenth module for storing the production plan of the recycle process obtained in the ninth module, and a module for outputting the production plan of the recycle process stored in the tenth module.

Moreover, to achieve the object according to the present invention, there is provided an apparatus for making a production plan of products utilizing recycled materials. The apparatus includes a first module for storing a lower limit value and an upper limit value of a recycled material utilization ratio of products utilizing predetermined recycled materials, a second module for storing a production plan of recycled materials of a recycle process, a third module for storing a production plan of products utilizing recycled materials in a production process, a fourth module for calculating a change plan of the recycled material utilization ratio, the change plan minimizing a stock between the recycle process and the production process, by use of the lower limit value and the upper limit value in the first module, the production plan of the recycle process in the second module, and the production plan of products utilizing recycled materials in the third module; a fifth module for storing the change plan obtained in the fourth module, and a sixth module for outputting a production plan of products utilizing recycled materials including the change plan stored in the fifth module.

Also, to achieve the object according to the present invention, there is provided an apparatus for making a production plan of recycled materials and a production plan of products utilizing recycled materials. The apparatus includes a first module for storing a predetermined lower limit value of a ratio of recycling, a second module for storing raw material constitution of raw materials of collected used products, a third module for storing raw material constitution of raw materials of products utilizing recycled materials using recycled materials, a fourth module for storing a predetermined lower limit value and a predetermined upper limit value of a recycled material utilization ratio of the products utilizing recycled materials, a fifth module for calculating an allotted ratio of use of raw materials which should be loaded by the products utilizing recycled materials to observe the lower limit value of the ratio of recycling, by use of the lower limit value of the ratio of recycling in the first module, the raw material constitution of raw materials of collected used products in the second module, the raw material constitution of raw materials of products utilizing recycled materials in the third module, and the lower limit value of the recycled material utilization ratio in the fourth module, a sixth module for storing the allotted ratio of use of raw materials obtained by the fifth module, a seventh module for storing a predicted supply amount of raw materials to a recycle process, an eighth module for storing a production plan of the products utilizing recycled materials, a ninth module for calculating a production plan of the recycle process by use of a supply amount of raw materials which should be loaded by the products utilizing recycled materials obtained by multiplying the predicted supply amount to the recycle process in the seventh module by the allotted ratio of use of raw materials stored in the sixth module and the production plan of products utilizing recycled materials in the eighth module, the production plan thus calculated minimizing a total of a stock of raw materials before recycle in the recycle process and a stock of recycled materials before the recycled materials are used for the products utilizing recycled materials in the production process, a tenth module for calculating a change plan of the recycled material utilization ratio, the change plan minimizing a stock between the recycle process and the production process, by use of the production plan of the recycle process obtained in the ninth module, the production plan of products utilizing recycled materials in the eighth module, and the lower limit value and the upper limit value in the fourth module, an 11th module for storing a production plan of products utilizing recycled materials including the production plan of the recycle process obtained in the ninth module and the change plan of the recycled material utilization ratio obtained in the tenth module, and a module for outputting the production plan of the products utilizing recycled materials in the 11th module.

According to the present invention, while observing the predetermined ratio of recycling, it is possible to make a production plan of recycled materials and a production plan of products utilizing recycled materials in which the total of quantities of stock before and after the recycle process takes the minimum value.

Other objects, features and advantages of the invention will become apparent from the following description of the embodiments of the invention taken in conjunction with the accompanying drawings.

### BRIEF DESCRIPTION OF THE DRAWINGS

FIG. 1 is a block diagram showing a flow of products, original or raw materials, and recycled materials in a range of processes from production to recycle of products.
FIG. 2 is a schematic block diagram showing an embodiment of a plan making system according to the present invention.
FIG. 3 is a graph showing a ratio of the monthly sales amount of products to the yearly sales amount thereof in a sales process 2 of FIG. 1.
FIG. 4 is a graph showing a ratio of the monthly quantity of production to the yearly quantity of production in a production process 1 of FIG. 1.
FIG. 5 is a graph showing a ratio of the monthly disassembly amount of collected used products to the yearly disassembly amount thereof in collection/disassembly process 4/5 of FIG. 1.
FIG. 6 is a graph showing a ratio of the monthly amount of recycled materials to the yearly amount thereof in a recycle process 6 of FIG. 1.
FIG. 7 is a diagram schematically showing raw materials of collected used products and reuse thereof for the same products for an example of air conditioners.
FIG. 8 is a flowchart showing a concrete example of a method of calculating an allotted ratio of raw material use which should be loaded by products using recycled materials.
FIG. 9 is a graph including the graphs of FIGS. 3 to 6 for the monthly production, sales, and disassembly amounts.
FIG. 10 is a diagram showing an example of monthly predicted supply amounts of raw materials from the collection/disassembly process 4/5 to the recycle process 6 of FIG. 2.
FIG. 11 is a graph showing a ratio of the monthly amount of stock to the yearly amount thereof between the respective processes for the quantity of production shown in FIG. 9.
FIG. 12 is a graph showing a ratio of the monthly amount of stock to the yearly amount thereof when the collection/disassembly process 4/5 is directly coupled with the production process 1 in FIG. 2.
FIG. 13 is a graph showing the monthly quantity of production, the monthly amount of sales, and the monthly amount of recycled materials when the quantity of production of recycled materials in the recycle process is adjusted to the quantity of production in the production process.
FIG. 14 is a graph showing a ratio of the monthly quantity of production to the yearly quantity thereof between the respective processes in association with FIG 13.
FIG. 15 is a graph showing the monthly quantity of production, the monthly amount of sales, and the monthly amount of recycled materials in each process when the quantity of production of recycled materials in the recycle process is shifted by two months relative to the quantity of production in the production process.
FIG. 16 is a graph showing a ratio of the monthly amount of stock to the yearly amount thereof between the respective processes in association with FIG 15.
FIG. 17 is a graph showing the monthly quantity of production, the monthly amount of sales, and the monthly amount of recycled materials in each process when the quantity of production of recycled materials in the recycle process is shifted further by one month relative to the quantity of production in the production process shown in FIG. 15.
FIG. 18 is a graph showing a ratio of the monthly quantity of production to the yearly quantity thereof between the respective processes in association with FIG 17.
FIG. 19 is a graph showing a monthly recycled material utilization ratio β when the monthly quantity of production of recycled materials in the recycle process is more than the monthly quantity of production in the production process.
FIG. 20 is a graph showing a ratio of the monthly amount of stock to the yearly amount thereof when the recycled material utilization ratio β of plastics is set as shown in FIG 19.
FIG. 21 is a block diagram showing an embodiment of an apparatus to make a production plan of recycled materials and a production plan of products utilizing recycled materials according to the present invention.
FIG. 22 is a diagram showing a data layout of a lower limit value of a ratio of recycling α stored in a storage 40 of FIG. 21.
FIG. 23 is a diagram showing a data layout including raw materials of collected used products in a storage 41 of FIG. 21.
FIG. 24 is a diagram showing a data layout including raw materials of products using recycled materials stored in a storage 41 of FIG. 21.
FIG. 25 is a diagram showing a data layout of a lower limit value of the recycled material utilization ratio β stored in a storage 43 of FIG. 21.
FIG. 26 is a diagram showing a data layout of an upper limit value of the recycled material utilization ratio β stored in a storage 44 of FIG. 21.
FIG. 27 is a diagram showing a data layout of a predicted supply amount to the recycle process stored in a storage 45 of FIG. 21.
FIG. 28 is a diagram showing a data layout of a production plan of products utilizing recycled materials stored in a storage 46 of FIG. 21.
FIG. 29 is a diagram showing a data layout of an allotted ratio of raw material use for products utilizing recycled materials stored in a storage 47 of FIG. 21.
FIG. 30 is a diagram showing a data layout of data stored in a plan storage 49 of FIG. 21.
FIG. 31 is a flowchart showing, in the form of a processing procedure of a calculation module of FIG. 21, an embodiment of a method of making a production plan of recycled materials and a method of production plan of products utilizing recycled materials according to the present invention.
FIG. 32 is a flowchart showing a concrete example of step S202 of FIG. 31.
FIG. 33 is a flowchart showing a concrete example of step S204 of FIG. 31.
FIG. 34 is a flowchart showing concrete examples respectively of steps S401, S402, and S403 of FIG. 33.
FIG. 35 is a flowchart showing a concrete example of step S205 of FIG. 31.

### DESCRIPTION OF THE EMBODIMENTS

Referring now to the drawings, description will be given of embodiments according to the present invention.

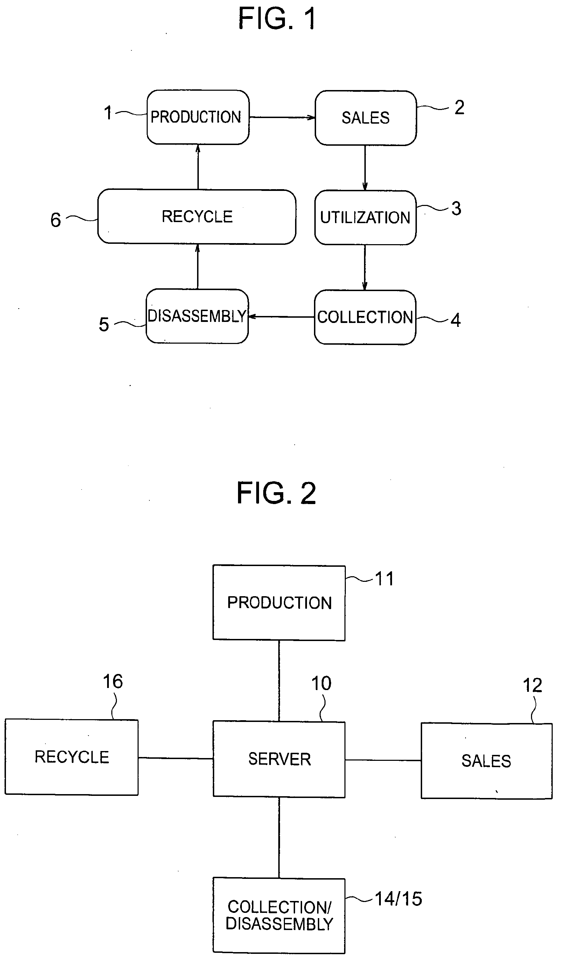

FIG. 1 is a block diagram showing a flow of products, raw materials, and recycled materials from a production process of products to a recycle process.

In FIG. 1, a production process 1 is a process in which a manufacturing company produces products. A sales process 2 is a process in which a shop sells the products. A utilization process 3 is a process in which a customer uses the product bought in the shop. In the utilization process, the customer carries about and uses the purchased product. A collection process 4 is a process in which the product which the user no longer uses is collected. The product collected in the collection process 4 (to be referred to as a collected used product hereinbelow) is disassembled in a disassembly process 5 into respective materials. Among the materials, reusable materials are supplied to a recycle process. For materials such as plastics, a pre-process is conducted, that is, the materials are processed into, for example, powder to be reused in the production process 1 (the process is referred to as a recycle process hereinbelow). The recycled materials thus recycled are delivered to a process, for example, the recycled materials are melted to be flown into a metallic mold or the like to be formed into parts of products utilizing recycled materials (to be referred to as products utilizing recycled materials hereinbelow). As above, the materials to be reused for products are circularly utilized through the cycle of processes shown in FIG. 1.

This embodiment provides a method of making a production plan of recycled materials and a production plan of products utilizing recycled materials (products utilizing recycled materials). The production plans are able to reduce the stock of raw materials in the recycle process 6, which are supplied to the recycle process 6 by disassembling collected raw materials in the reuse circulation (the stock of raw materials before recycle) as well as the stock of recycled materials in the production process 1 supplied from the recycle process 6 before the recycled materials are reused for products utilizing recycled materials.

FIG. 2 is a diagram showing a configuration of an embodiment of a plan making system according to the present invention. The system includes a serve 10, a client Personal Computer (PC) 11 of a manufacturing company producing products, a client PC 12 of a shop selling the products, a client PC 14/15 of a collecting and disassembling firm to collect and to disassemble used products, and a client PC 16 of a recycle company.

In FIG. 2, the client PC 11 of the manufacturing company supplies the server 10 with a yearly production plan of products utilizing recycled materials (i.e., products utilizing recycled materials). The client PC 12 of the shop supplies the server 10 with data regarding the yearly sales amount of the products. The client PC 14/15 of the collecting and disassembling firm supplies the server 10 with data (a predicted supply amount of each material to the recycle process 6) regarding the yearly disassembly amount of collected used products, and the client PC 16 of the recycle company provides the server 10 with data regarding the yearly quantity of production of recycled materials resultant from the disassembly of collected used products. Using the supplied data, the server 10 conducts operation according to the embodiment of the present invention, namely, achieves the method of making a production plan of recycled materials and a production plan of products utilizing recycled materials to optimize the stock of raw materials (to be referred to as "before-recycle stock" hereinbelow) before a recycling operation in the recycle process 6 (FIG. 1; before the work process, for example, to break the collected used products into pieces of raw materials) and the stock of raw materials (to be referred to as "before-production stock" hereinbelow) before the recycled materials supplied from the recycle process 6 are fed to the production process 1 to produce parts of products utilizing recycled materials. The server 10 supplies the production plan of recycled materials to the client PC 16 of the recycle company and the production plan of products utilizing recycled materials to the client PC 11 of the manufacturing company.

The recycle company produces recycled materials according to the production plan of recycled materials. The manufacturing company uses the recycled materials according to the production plan of the products utilizing recycled materials to thereby produce the products utilizing recycled materials. As a result, the stock of raw materials in the recycle company and that of raw materials in the manufacturing company are retained in an optimal state. This possibly reduces the load of storage charges for a warehouse of the recycled materials.

Next, description will be given of an embodiment of a method of making a production plan of recycled materials and a production plan of products utilizing recycled materials according to the present invention. In the description of the embodiment, air conditioners are used as examples of the products produced in the production process 1.

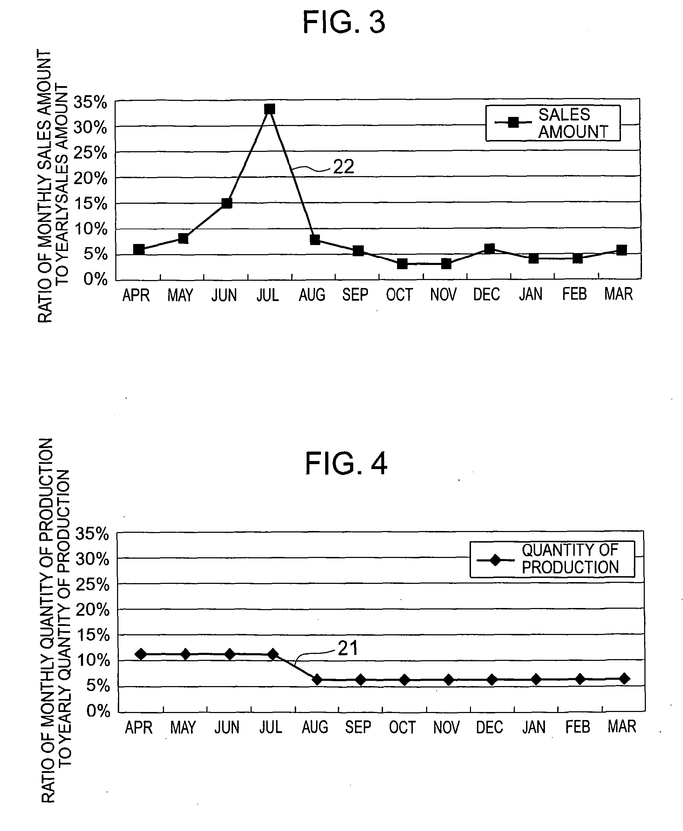

FIG. 3 is a graph showing a ratio of the monthly sales amount of products to the yearly sales amount thereof in a sales process 2 (FIG. 1) for air conditioners as products utilizing recycled materials. In the graph, the abscissa represents the lapse of time in units of months and the ordinate indicates a ratio of monthly sales amount of products to the yearly sales amount thereof. Data of the graph will be referred to as "monthly product sales amount 22" hereinbelow. The monthly product sales amount 22 is associated with the sales process 2 and is supplied from the client PC 12 of the shop to the server 10 (FIG. 2). In the graph, a rectangular mark indicates a ratio of the product sales amount of each month, and hence the total of the monthly ratios is 100%.

According to the graph showing the yearly sales tendency of air conditioners, the monthly product sales amount 22 takes a peak value in July and is about six times that of the smaller monthly product sales amount 22 during the period from September to March.

FIG. 4 is a graph showing a ratio of the monthly quantity of production to the yearly quantity thereof in the production process 1 (FIG. 1) for air conditioners as products utilizing recycled materials. Data of the graph will be referred to as "monthly production quantity 21" hereinbelow. The monthly production quantity 21 is associated with the production process 1 and is supplied from the client PC 11 of the manufacturing company to the server 10 (FIG. 2) to be used for the production plan of products utilizing recycled materials. In the graph, a diamond-shaped mark indicates a ratio of the quantity of production of each month, and hence the total of the monthly ratios is 100%.

According to the graph, the yearly quantity of production of air conditioners has a tendency in which the quantity of production is increased in the period from April to July in which the monthly production quantity sales amount 22 takes a peak value (FIG. 3). The quantity of production is kept at a low level in the period from August to March. However, if the production plan is made according to the tendency of the monthly product sales amount 22 (FIG. 3), the activity or availability ratio of the production facility becomes lower when the sales amount 22 is small. To cope with this disadvantage, the monthly production quantity 21 is not so much changed as the monthly product sales amount 22.

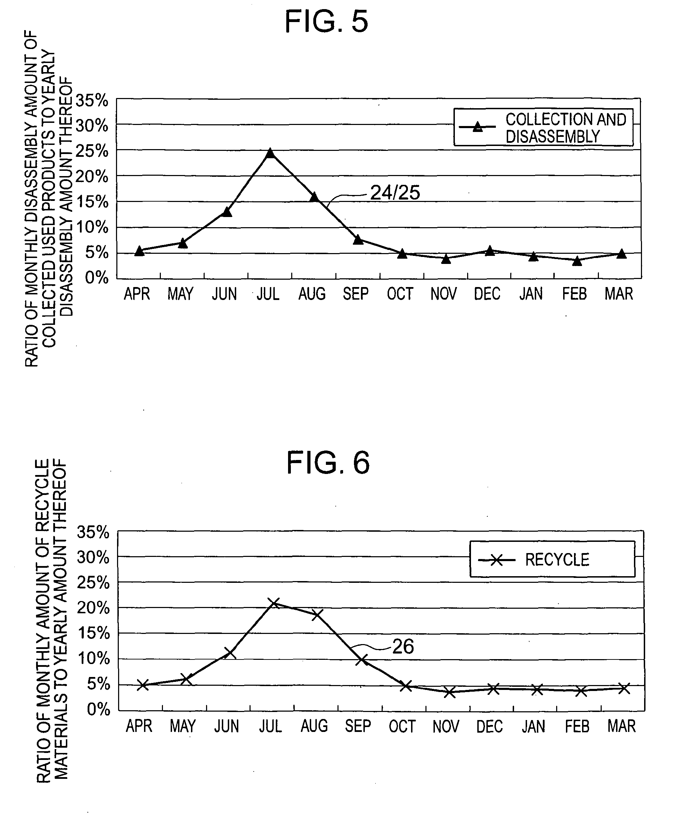

FIG. 5 is a graph showing a ratio of the monthly disassembly amount of collected used products (i.e., the disassembly amount) to the yearly disassembly amount thereof in collection and disassembly processes 4 and 5 (FIG. 1) for air conditioners as collected used products. Data of the graph will be referred to as "monthly disassembly amount 24/25" hereinbelow. The monthly disassembly amount 24/25 is associated with the collection process 4 and the disassembly process 5 (which will be collectively referred to as "collection/disassembly process 4/5 hereinbelow). The monthly disassembly amount 24/25 also represents a ratio of the monthly amount of supply of raw materials to the yearly amount of supply thereof from the disassembly process 5 to the recycle process 6. The monthly disassembly amount 24/25 is data supplied from the client PC 14/15 of the collecting/disassembly firm to the server 10 (FIG. 2). To make the production plan of the recycled materials, the server 10 uses the monthly disassembly amount 24/25 as a predicted supply amount of raw materials to the recycle process 6. In the graph, a triangular mark indicates a ratio of the disassembly amount of each month, and hence the total of the monthly ratios is 100%.

In the graph of FIG. 5, the monthly disassembly amount 24/25 of collected used air conditioners has a tendency similar to that of the monthly product sales amount 22 (FIG. 3) in which the peak appears in July. However, due to the lead time from the sales process 2 to the collection process 4 (FIG. 1), the peak of the monthly disassembly amount 24/25 increases slowly and decreases slowly relative to the peak of the monthly product sales amount 22.

FIG. 6 is a graph showing a ratio of the monthly disassembly amount of raw materials to the yearly amount thereof from the collection/disassembly process 4/5 to the recycle process 6 (FIG. 1). Data of the graph will be referred to as "monthly recycled material amount 26" hereinbelow. The monthly recycled material amount 26 is associated with the recycle process 6 and also represents a ratio of the monthly amount of supply of recycled materials to the yearly amount of supply thereof from the recycle process 6 to the production process 1 (FIG. 1). The monthly recycled material amount 26 is data supplied from the client PC 16 of the recycle company to the server 10 (FIG. 2). To make the production plan values of the recycled materials, the server 10 (FIG. 2) uses the monthly recycled material amount 26 as the basic data of the production plan in the recycle process 6. In the graph, a mark "X" indicates a ratio of the recycled material amount of each month, and hence the total of the monthly ratios is 100%.

In FIG. 6, the monthly recycled material amount 26 is drawn for adjustment to the monthly disassembly amount 24/25 by the collection process 4 and the disassembly process 5 (FIG. 5). Due to the lead time of about ten days between the collection process 4 and the disassembly process 5, the peak of the monthly recycled material amount 26 is shifted forward to a point of time relative to that of the monthly disassembly amount 24/25. Specifically, the peak of the monthly recycled material amount 26 appears in July and August.

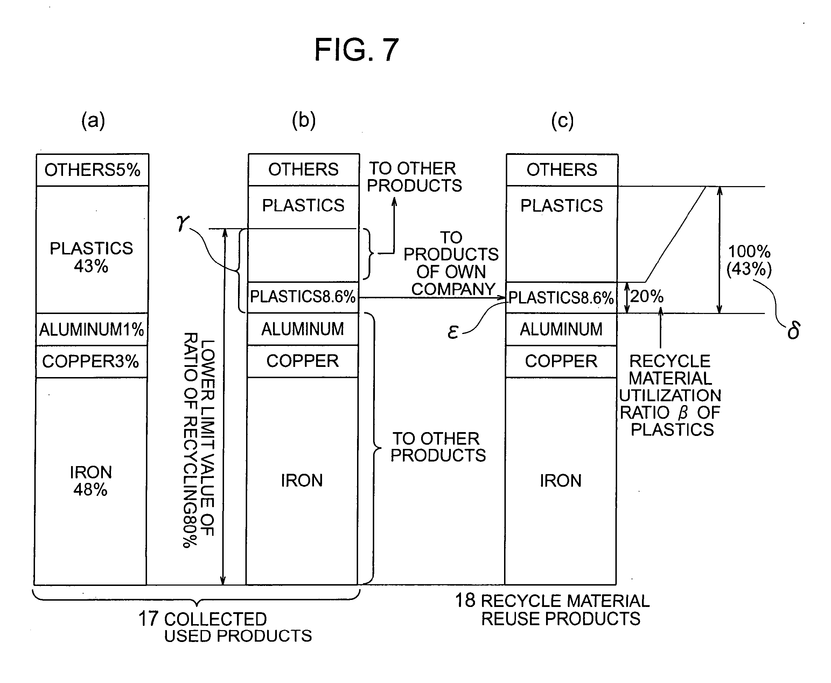

FIG. 7 is a diagram showing how the raw materials of collected used products are reused for the same products (air conditioners in this example).

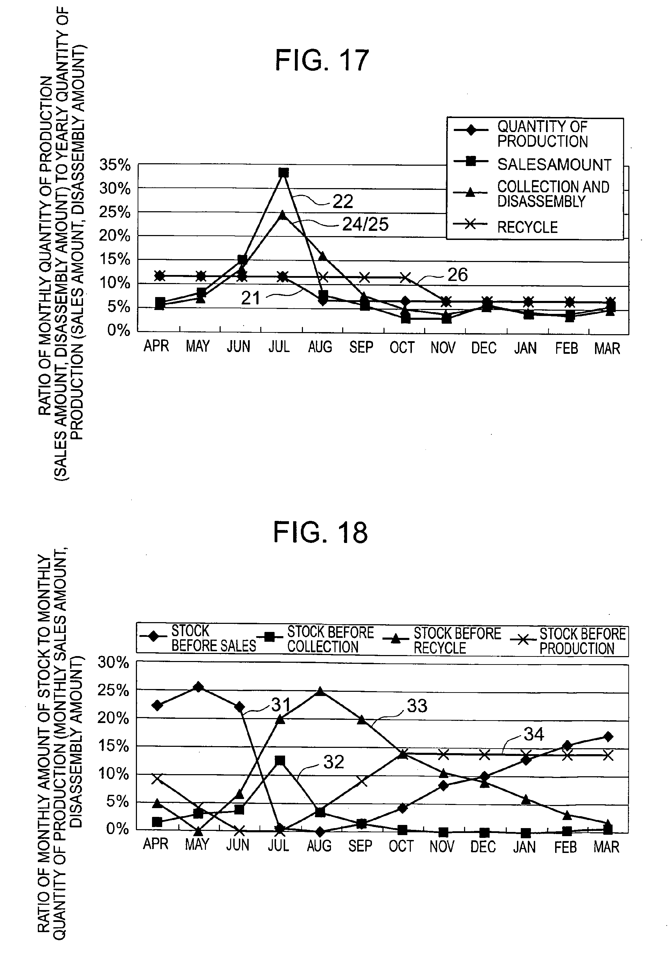

Assume that the constitution of raw materials of the collected used products 17 is as shown in (a) of FIG. 7, that is, iron (48%), copper (3%), aluminum (1%), plastics (43%), and others (5%). Since products (i.e., products utilizing recycled materials) 18 utilizing raw materials obtained from the collected used products 17 has the same constitution of raw materials as that of the collected used products 17, the constitution of the products utilizing recycled materials 18 shown in (c) of FIG. 17 is the same as that shown in (a) of FIG. 17.

Assume that the lower limit value of the ratio of recycling α (the ratio of raw materials to be recycled among the raw materials included in the collected used products) is set to 80%. Then, as can be seen from (b) of FIG. 7, since raw materials of metals such as iron, copper, and aluminum, when melted, can be directly recycled for building steels or the like, it is assumed that the metallic raw materials are entirely recycled (reused). In contrast therewith, when plastics materials are melted to be used as recycled materials, the recycled materials are deteriorated in performance when compared with associated virgin plastics. Therefore, it is a common practice to reuse the recycle plastics mixed with virgin plastics. The recycled material utilization ratio β is the ratio of the recycle plastics obtained from the recycle process 6 for the products utilizing recycled materials 18 to the entire plastics used in the products utilizing recycled materials 18. In this constitution, the lower limit value stipulated by the law for the recycled material utilization ratio β is set to 20%.

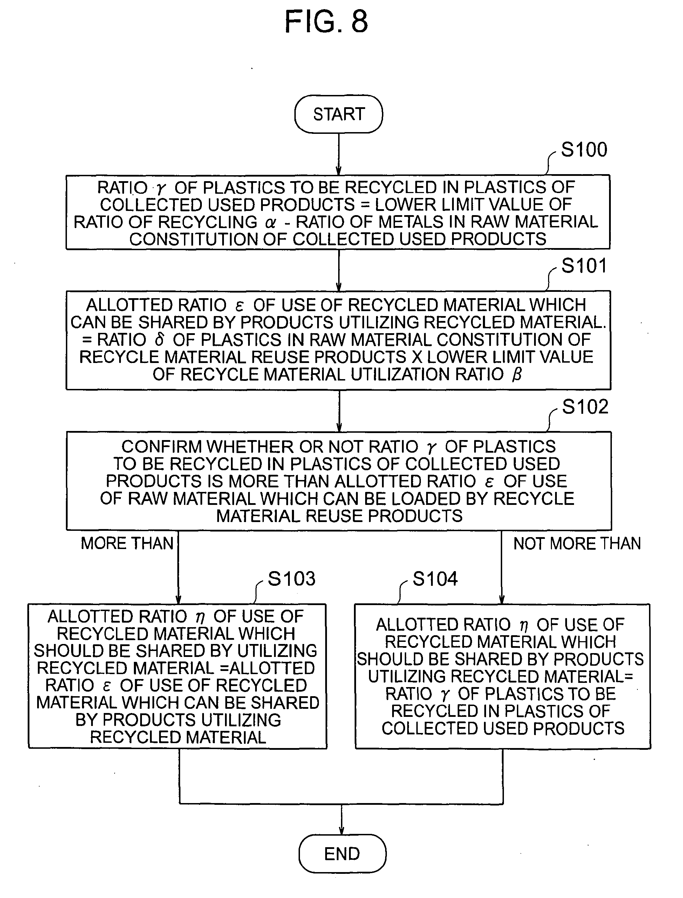

In the description of the embodiment below, the recycled materials as objects of the production plan of recycled materials and the recycled materials as objects of the production plan of the products utilizing recycled materials 18 indicate plastics unless otherwise noticed. The allotted ratios of use of raw materials for the products utilizing recycled materials 18 vary depending on the constitution of raw materials and the ratio of recycling α for the collected used products 17 as well as the recycled material utilization ratio β for the products utilizing recycled materials 18. Referring now to FIG. 7, description will be given, according to the flowchart shown in FIG. 8, of a procedure of calculating the allotted ratios of use of raw materials for the products utilizing recycled materials 18.

In FIG. 7, a ratio γ of plastics to be recycled in the plastics of the collected used products 17 is obtained by subtracting the ratio of metals in the constitution of the products utilizing recycled materials 18 from the lower limit value of the ratio of recycling α (step S100). According to FIG. 7, the ratios of metals are, specifically, 48% (iron), 3% (copper), and 1% (aluminum) in the raw material constitution of the collected used products 17. The total value of the ratios of metals "52%" is subtracted from the lower limit value (= 80%) of the ratio of recycling α to obtain 28%. This is the ratio γ of plastics to be recycled in the plastics of the collected used products 17.

Next, a ratio δ ((c) of FIG. 7) of the plastics in the raw material constitution in the products utilizing recycled materials 18 is multiplied by the lower limit value (20%) of the recycled material utilization ratio β to obtain an allotted ratio ε of use of raw materials which can be loaded by the products utilizing recycled materials 18 (step S101). According to FIG. 7, since the raw material constitution of the collected used products 17 is similar to that of the products utilizing recycled materials 18, the ratio δ of the plastics in the raw material constitution of the products utilizing recycled materials 18 is 43%. The lower limit value of the recycled material utilization ratio β is 20% of the overall plastics (100%). Therefore, the allotted ratio ε of use of recycled materials (plastics) which can be loaded by the products utilizing recycled materials 18 is obtained as 43% x 0.2 (= 20%) = 8.6%.

Next, a check is made to determine whether or not the ratio γ, obtained in step S100, of plastics to be recycled in the plastics of the collected used products 17 is more than the allotted ratio ε, obtained in step S101, of use of recycled materials (plastics) which can be loaded by the products utilizing recycled materials 18 (step S102).
(a) If the ratio γ is more than the allotted ratio ε (γ > ε), the allotted ratio η of use of raw materials to be loaded by the products utilizing recycled materials 18 is set to the allotted ratio ε (γ = ε; step S103).
(b) If the ratio γ is equal to or less than the allotted ratio ε (γ ≦ ε), the allotted ratio η of use of raw materials which should be loaded by the products utilizing recycled materials 18 is set to the ratio γ (γ = η; step S104).

In the case of FIG. 7, while the ratio γ of plastics to be recycled in the plastics of the collected used products 17 is 28%, the allotted ratio ε of use of raw materials which can be loaded by the products utilizing recycled materials 18 is 8.6%. That is, γ > ε (step S102), and hence the allotted ratio ε is set as the allotted ratio η (= 8.6%) of use of raw materials which should be loaded by the products utilizing recycled materials 18 (step S103). As can be seen from (b) and (c) of FIG. 7, 8.6% of the plastics obtained from the collected used products 17 are reused for the products utilizing recycled materials 18.

In contrast therewith, for γ ≦ ε, the ratio γ is set as the ratio η (step S104). For example, as in the prior art, if the lower limit of the ratio of recycling α is 50%, the ratio γ is calculated as 50% - 52% = -2%. That is, since the result is a negative value, the ratio γ is set to 0% (step S100). The allotted ratio ε is 8.6% as in the above case. Therefore, it is determined in step S102 that the ratio γ is equal to or less than the allotted ratio ε. As a result, the allotted ratio η is equal to the ratio γ, i.e., 0%. This is because the lower limit value "50%" of the ratio of recycling α can be satisfied by recycling only the raw materials of metals.

In the case of FIG. 7, although 28% of plastics within the range limited by the lower limit value of the ratio of recycling α for the collected used products 17 are to be reused, only 8.6% of plastics within the range limited by the lower limit value of the ratio of recycling α for the collected used products 17 are reused for the products utilizing recycled materials 18. It is hence necessary that the remaining plastics, i.e., 28% - 8.6% = 19.4% of plastics are recycled for other products. In any situation, to observe the lower limit value "80%" of the ratio of recycling α, it is required that the side of the products utilizing recycled materials 18 consumes the amount of raw materials obtained by multiplying the supply amount supplied from the raw materials of the collected used products per year to the recycle process 6 by the allotted ratio η = 8.6% of use of raw materials which should be loaded by the products utilizing recycled materials 18. The raw material supply amount to the recycle process 6 can be related to the quantity of production of the products utilizing recycled materials 18 in this way.

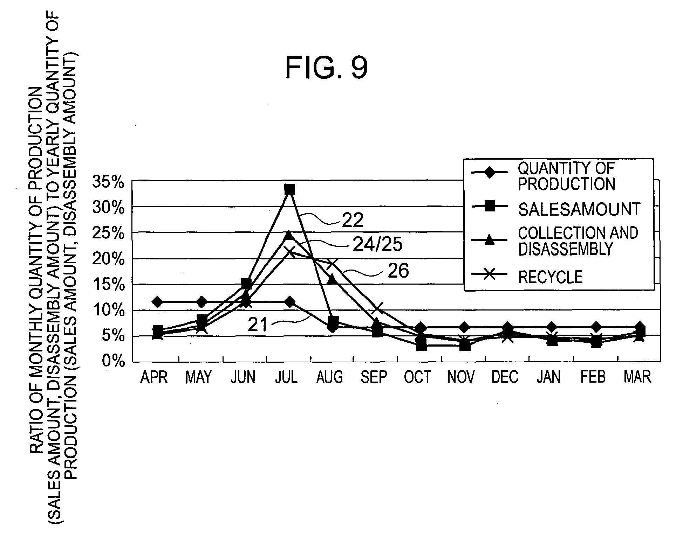

FIG. 9 is a graph including the graphs of FIGS. 3 to 6 for the monthly production, sales, and disassembly amounts. In this graph, the same symbols and marks are uses as for FIGS. 3 to 6.

In FIG. 9 showing the use of the recycled materials produced from the recycle process 6 (FIG. 1), the monthly production quantity 21 in the production process 1 is more than the monthly recycled material amount 26 in the recycle process 6 in April, May, and October and subsequent months. In contrast therewith, the monthly recycled material amount 26 in the recycle process 6 is more than the monthly production quantity 21 in the production process 1 in July, August, and September. The imbalanced situation of the production amount exists between the adjacent processes as above causes stock of materials therebetween.

Since the monthly production quantity 21 in the production process 1 (FIG. 4) represents a ratio of the monthly production quantity of products utilizing recycled materials to the yearly production quantity thereof, the monthly amount of use of recycled materials used for products utilizing recycled materials 18 to the monthly amount thereof is also represented by the same ratio as for the monthly production quantity 21. This also applies to monthly product sales amount 22 in the sales process 2 (FIG. 3) .

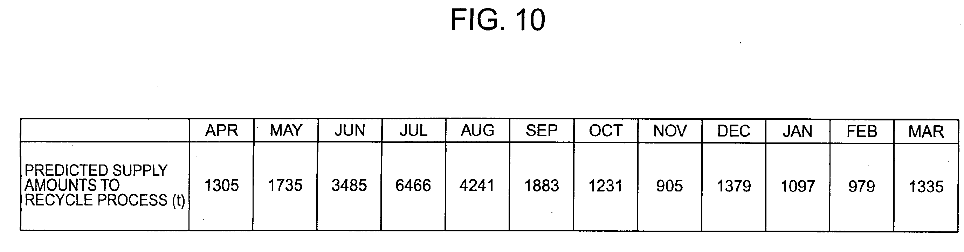

FIG. 10 is a diagram showing an example of monthly predicted supply amount of raw materials in weight units of tons (t) from the collection/disassembly process 4/5 to the recycle process 6 of FIG. 1. The ratio of the monthly predicted supply amount of raw materials to the yearly predicted supply amount thereof corresponds to the monthly disassembly amount 24/25 (FIGS. 5 and 9) of the collection/disassembly process 4/5 shown in FIG. 9.

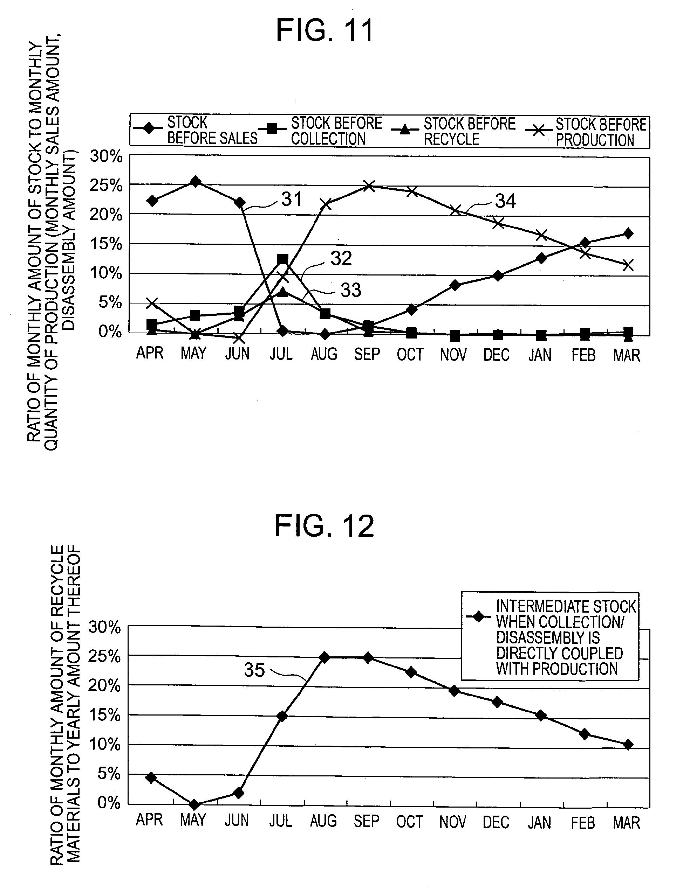

FIG. 11 is a graph showing a ratio of the monthly amount of stock to the yearly amount thereof between the respective processes for the quantity of production shown in FIG. 9. The line 31 indicated by diamond-shaped marks represents the stock before the products produced in the production process 1 (corresponding to the products utilizing recycled materials 18 in FIG. 7) are purchased by customers in the sales process 2 (i.e., the before-sales stock). The line 32 indicated by rectangular marks represents the stock (i.e., the before-collection stock) before the used products (i.e. the collected used products) purchased in the sales process 2, which are any longer necessary for use by the customer, are collected in the collection process 4. The line 33 indicated by triangular marks represents the stock of raw materials before the collected used products disassembled in the disassemble process 5 are recycled in the recycle process 6 (i.e., the before-recycle stock). The line 34 indicated by X-shaped marks represents the stock of recycled materials before the materials recycled in the recycle process 6 are reused for products in the production process (i.e., the before-production stock).

According to FIG. 11, it is shown that the before-sales stock 31 and the before-production stock 34 take particularly a large value. By counter balancing the monthly production quantity 21 of FIG. 4 and the monthly sales amount 34 of FIG. 3, then the before-sales stock 31 can be decreased. However, in that case, a change of production quantity between production quantity of July at its peak and production quantity of during August to March in which the sales amount is reduced, and the operation ratio of the production facility becomes low while the production amount is a little. Accordingly, for not lowering the operation ratio of the production facility, the production amount is only changed in two stages and its difference is also remained a small. And for not the before-sales stock does not go out, production amount during April to July is increased for preventing from the before-sales stock go out at the peak of July in which monthly sales amount is the largest, and the production quantity is reduced during August to March of which sales amount is a little. In this way, since there is a constraint of the operation ratio of the production facility, therefore, it can not help that the before-sales stock 31 becomes large. The before-production stock 34 is the stock appearing because the production quantity of the recycled materials in the recycle process 6 is adjusted to the amount of raw materials from the collection/disassembly process 4/5. As can be seen from FIG. 6, while the monthly recycled material amount 26 adjusted to the monthly disassembly amount 24/25 shown in FIG. 5 takes a peak in July and August, the monthly production quantity 21 does not increase as shown in FIG. 4. Therefore, the stock begins to abruptly increase in July. The monthly disassembly amount 24/25 begins to lower in October. In association therewith, the monthly recycled material amount 26 also lowers, and hence the before-production stock 34 decreases.

The before-production stock 34 can be reduced by optimizing the production plan of recycled materials and that of the products utilizing recycled materials (the products utilizing recycled materials). Next, description will be given of a method of optimizing the production plan of recycled materials and that of the products utilizing recycled materials to thereby reduce the before-production stock 34. The method includes two measures.

### (1) First measure

The production plan of recycled materials is optimized. At present, the tendency of the monthly recycled material amount 26 (FIGS. 6 and 9) in the recycle process 6 is adjusted to that of the monthly disassembly amount 24/25 (FIGS. 5 and 9) of the collection/disassembly process 4/5. This is because the before-recycle stock 33 (FIG. 11) can be reduced by immediately recycling in the recycle process 6 the plastics supplied from the disassembly process 6. However, as can be seen from FIG. 9, the peak (June to September) of the monthly recycled material amount 26 is shifted from the peak (April to July) of the monthly production quantity 21 in the production process 1 (FIGS. 4 and 9). As a result, while the production quantity does not increase, the supply of recycled materials to the production process 1 increases, and hence the before-production stock 34 grows.

As the first measure to cope with the difficulty according to the embodiment, the monthly recycled material amount 26 in the recycle process 6 is set to a value between the monthly disassembly amount 24/25 of the collection/disassembly process 4/5 and the monthly production quantity 21 of the production process 1. Due to the first measure, although the before-recycle stock 33 increases, the before-production stock 34 can be reduced. Therefore, the total value of the before-recycle stock 33 and the before-production stock 34 can be lowered.

The server 10 (FIG. 2) is able to create the production plan of recycled materials to minimize the total value of the before-recycle stock 33 and the before-production stock 34 as follows.

First, the server 10 obtains and stores the monthly disassembly amount 24/25 of the collection/disassembly process 4/5, that is, the monthly predicted supply (corresponding to the monthly disassembly amount 24/25) of raw materials including seasonal variations to the recycle process 6 and the monthly production quantity 21 in the production process 1 using the recycled materials. The server 10 makes a production plan of recycled materials by setting the monthly recycled material amount 26 in the recycle process 6 to a value between the monthly disassembly amount 24/25 in the collection/disassembly process 4/5 and the monthly production quantity 21 of products utilizing recycled materials in the production process 1 or by setting the monthly recycled material amount 26 to either one thereof. That is, when the graphs are collectively drawn, the line 26 with X-shaped marks matches with either one of the line 24/25 with triangular marks and the line 21 with diamond-shaped marks or is between the line 24/25 and the line 21. As a result, the monthly recycled material amount 26 in the recycle process 6 takes a modest value with respect to the production amounts of the processes before and after the recycle process 6, that is, the monthly disassembly amount 24/25 of the collection/disassembly process 4/5 and the monthly production quantity 21 of the production process 1. Therefore, the total value of the before-recycle stock 33 and the before-production stock 34 takes a minimum value. This is the first condition which the production plan of recycled materials should satisfy.

Next, the server 10 obtains a before-production stock 35 when the collection/disassembly process 4/5 is directly coupled with the production process 1 without using the recycle process 6 (the stock 35 is referred to as an intermediate stock for the discrimination of the before-production stock 34 of FIG. 11).

FIG. 12 is a graph showing a ratio of the monthly amount of stock to the yearly amount thereof when the collection and disassembly process 4/5 is directly coupled with the production process 1.

In the graph of FIG. 12, the intermediate stock 35 represents the minimum value of the total value of the before-recycle stock 33 and the before-production stock 34 in FIG. 11 and is equal to or more than the value of this graph in any situation. Even in a case in which the first condition is not satisfied, the total value of the before-recycle stock 33 and the before-production stock 34 takes the minimum value if none of the before-recycle stock and the before-production stock 34 calculated from a production plan of recycled materials set in advance exceeds the intermediate stock 35 obtained for each month as shown in FIG. 12. This is the second condition which the production plan of recycled materials should satisfy.

As above, if the production plan of recycled materials satisfies the first or second condition, the total value of the before-recycle stock 33 and the before-production stock 34 takes the minimum value.

The production plan of recycled materials is actually optimized as below.
(1) The production of recycled materials is achieved mainly by apparatus.
(2) If increase and decrease of apparatuses occurs frequently, associated costs are increased.
(3) When the collection/disassembly plan of collected used products in the collection/disassembly process 4/5 is compared with the production plan of products utilizing recycled materials in the production process 1, occupancy ratio of the apparatus is higher in the production process 1. Therefore, as shown in FIG. 4, it is desirable to possibly lower the change in the monthly production quantity 21 in the production process 1 to the maximum extent.

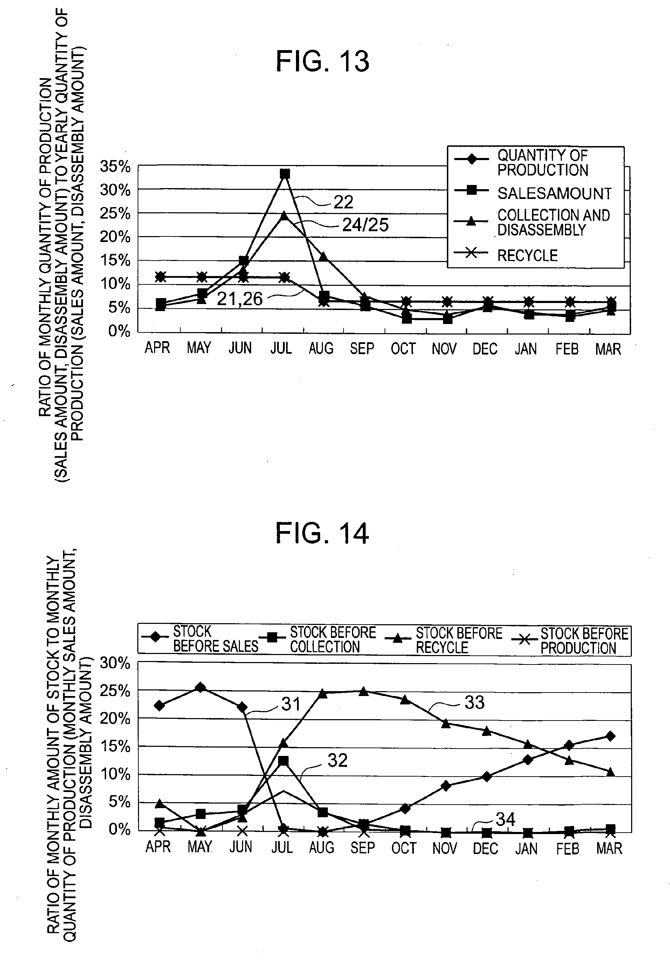

For this purpose, the production plan of the production process 1 is set as the basic factor of the production plan of recycled materials. As shown in FIG. 13, the monthly recycled material amount 26 in the recycle process 6 is adjusted to the monthly production quantity 21 in the production process 1. Resultantly, the first condition is satisfied. FIG. 14 shows the stock amounts between the respective processes when the monthly recycled material amount 26 is set as shown in FIG. 13.

By comparing FIG. 14 with FIG. 11, it is understood that although the before-sales stock 31 and the before-collection stock 32 are kept unchanged, the before-recycle stock 33 takes a large value in a period from July to March with its peak in September. In contrast therewith, the before-production stock 34 is 0% throughout the year. In this situation, the total of the yearly stock ratios from April to March of the before-recycle stock 33 and that of the before-production stock 34 (i.e., the stock ratio indicated by a triangular mark for each month and that indicated by an X-shaped mark (0%) in FIG. 14) is 174%. As shown in FIG. 9, in a case in which the monthly recycled material amount 26 in the recycle process 6 is adjusted to the monthly disassembly amount 24/25 in the collection/disassembly process 4/5, the total of the stock ratios of 12 months from April to March of the before-recycle stock 33 and those of the before-production stock 34 shown in FIG. 11 is 189%. That is, the total stock amount of the year can be reduced. Naturally, since the before-production stock 34 is 0% through the year, the before-recycle stock 33 shown in FIG. 14 is substantially equal to the intermediate stock 35 when the collection/disassembly process 4/5 is directly coupled with the production process 1 shown in FIG. 12.

For the stock ratio of FIG. 14, although the before-production stock 34 lowers as compared with the stock ratio shown in FIG. 11, the before-recycle stock 33 increases. This reduces the total value of the before-recycle stock 33 and the before-production stock 34. This resultantly reduces costs required for the total of the before-recycle stock 33 and the before-production stock 34. Therefore, the manufacturer asks the recycle company for cooperation to adjust the monthly recycled material amount 26 in the recycle process 6 to the monthly production quantity 21 in the production process 1.

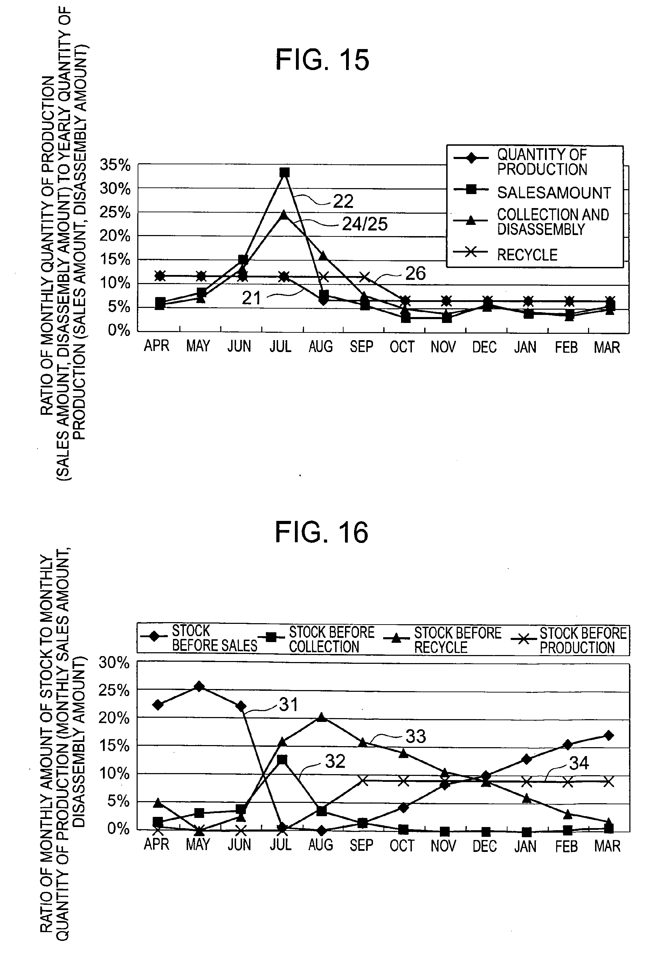

Next, the monthly recycled material amount 26 of the recycle process 6 in FIG. 13 in which the monthly recycled material amount 26 is adjusted to the monthly production quantity 21 is generally shifted forward by two months relative to the monthly production quantity 21 as shown in FIG. 15. That is, the production is enhanced to a peak in a period from June to September to thereby reduce the production quantity of recycled materials in April, May, and a period from October to March. The two-month forward shift of the monthly production quantity 21 is conducted to adjust the peak thereof to that of the monthly disassembly amount 24/25 in the collection/disassembly process 4/5.

However, in September, the monthly recycled material amount 26 takes a value other than an intermediate value between the monthly production quantity 21 and monthly disassembly amount 24/25 or equal to the value of either one thereof. As a result, the first condition for the production plan of recycled materials cannot be satisfied.

FIG. 16 is a graph showing the monthly amount of stock between the respective processes in a situation of FIG 15.

In the graph of FIG. 16, the before-recycle stock 33 when the monthly recycled material amount 26 is changed as shown in FIG. 15 is less than the intermediate stock 35 when the collection/disassembly process 4/5 is directly coupled with the production process 1 as shown in FIG. 12. Similarly, the before-production stock 34 is less than the intermediate stock 35 shown in FIG. 12. This indicates that the second condition for the production plan of recycled materials is satisfied in the case of FIG. 15.

By comparing FIG. 16 with FIG. 14, it is determined that before-recycle stock 33 begins to reduce in August. In contrast therewith, the before-production stock 34 increases in April and a period from August to March. The total value of the ratios of the before-recycle stock 33 and the before-production stock 34 for one year is 174%, which is the minimum value as in FIG. 14.

As above, in the situation of FIG. 15, although the first condition for the production plan of recycled materials is not satisfied, the second condition is satisfied. That is, The total value of the ratios of the before-recycle stock 33 and the before-production stock 34 for one year takes the minimum value.

FIG. 17 is a graph showing the monthly quantity of production, the monthly amount of sales, and the monthly disassembly amount of recycled materials in each process when the monthly recycled materials amount 26 of the recycle process 6 shown in FIG. 15 is shifted forward further by one month.

In FIG. 17, the production of recycled materials is enhanced such that the recycled material amount 26 in the recycle process 6 takes a peak value in a period from July to October and the production is lowered in a period from April to June and a period from November to March.

FIG. 18 is a graph showing the stock between the respective processes in the situation of FIG 17.

According to the graph of FIG. 18, in July, the before-recycle stock 33 is more than the intermediate stock 35 shown in FIG. 12. In March, the before-production stock 34 is more than the intermediate stock 35 shown in FIG. 12. Since the before-recycle stock 33 and the before-production stock 34 exceed the intermediate stock 35, the second condition for the production plan of recycled materials cannot be satisfied. In this situation, the total of the before-recycle stock 33 and the before-production stock 34 for 12 months takes a value of 228%, which is more than 174% in the case of FIG. 14. In summary, the monthly recycled material amount 26 in the recycle process 6 shown in FIG. 17 satisfies neither of the first condition nor the second condition for the production plan of recycled materials.

As described above, by adjusting the monthly recycled material amount 26 to the monthly production quantity 21 (FIG. 13), the first condition for the production plan of recycled materials is satisfied. In addition, by adjusting the peak of the monthly production quantity 21 to that of the monthly disassembly amount 24/25 (FIG. 15), the second condition for the production plan of recycled materials is satisfied. In either cases, the total of the stock ratio of the before-recycle stock 33 and that of the before-production stock 34 in a period of 12 months from April to March takes the minimum value, and hence the costs required for the stock can be reduced.

### (2) Second measure

By changing the recycled material utilization ratio β of plastics in the products utilizing recycled materials b(FIG. 7), the recycled material utilization amount is changed in the products utilizing recycled materials to resultantly reduce the before-production stock 34.

Assume in this situation that a lower limit value of 20% is set to the recycled material utilization ratio β of plastics according to regulations of the law. Assume further that the upper limit value of the recycled material utilization ratio β is 40% due to technical restrictions. Assume that the production facility in the production process 1 can change the recycled material utilization ratio β in a range from 20% to 40%.

In general, the higher the recycled material utilization ratio β is, the greater the variation in material characteristics is. Therefore, in a case in which products utilizing recycled materials are produced through plastic extrusion, it is required to produce the products having the same quality even if a material characteristic varies by elongating the extrusion time. For this purpose, it is possible to increase the recycled material utilization ratio β only when the production quantity 21 is low in the production process 1. This corresponds to a period from August to March in the production of air conditioners used as an example. The before-production stock 34 can be reduced by increasing the recycled material utilization ratio β when the recycled material amount 26 of the recycle process 6 is more than the monthly production quantity 21 of the production process 1. This corresponds to a period from August to September in the case of FIG. 15. Consequently, the recycled material utilization ratio β is doubled in this situation.

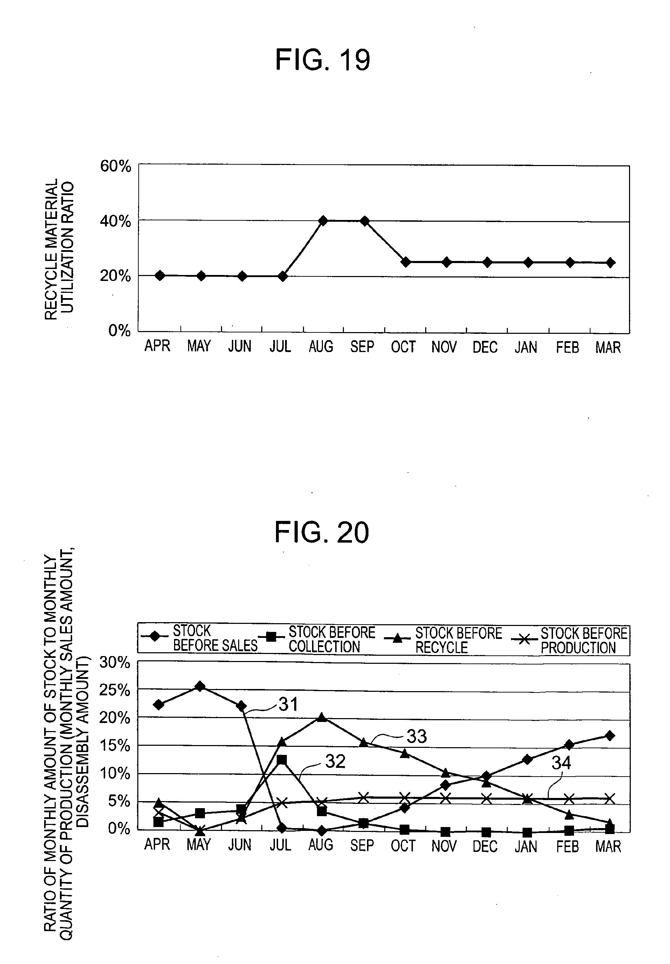

FIG. 19 is a graph showing a monthly recycled material utilization ratio β for the plastic material reuse products under the conditions described above (FIG. 7). For example, as shown in FIG. 15, in August and September when the monthly quantity of production of recycled materials 26 in the recycle process 6 is more than the monthly quantity of production 21 in the production process 1, the recycled material utilization ratio β is set to 40%. In other than August and September, the ratio β is set to 20% or 25%.

FIG. 20 is a graph showing a concrete example of the stock amount between the respective processes when the recycled material utilization ratio β of plastics is set as shown in FIG 19.

In the graph of the concrete example of FIG. 20, when compared with the stock amount shown in FIG. 16, the before-production stock 34 is reduced in a period from September to March. The total value of the ratio of the before-production stock 34 for 12 months is 73% when the recycled material utilization ratio β is fixed (FIG. 16). The total value is 58% when the recycled material utilization ratio β is changed (FIG. 20) and hence the before-production stock 34 can be reduced.

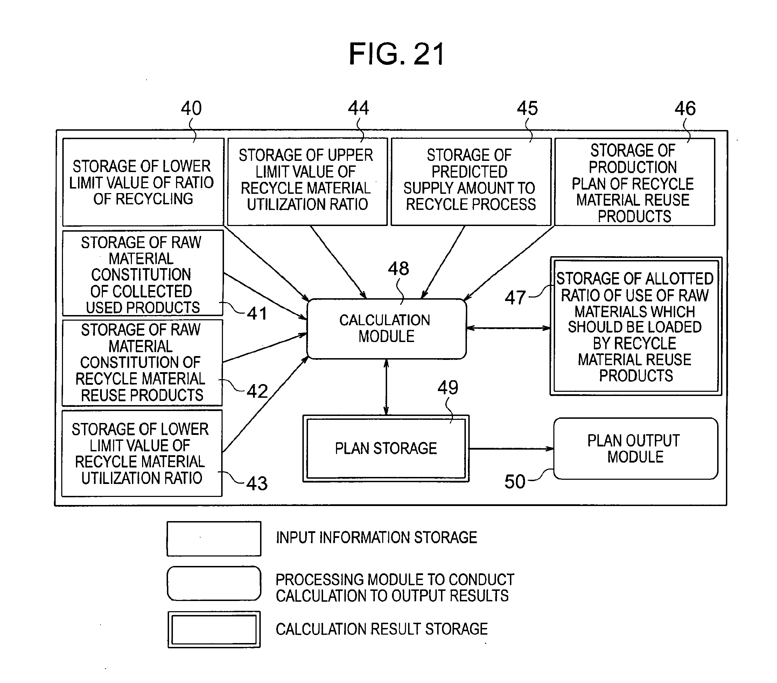

FIG. 21 is a block diagram showing an embodiment of an apparatus to make a production plan of recycled materials and a production plan of products utilizing recycled materials according to the present invention. The apparatus includes storages 40 to 47, a calculation module 48, a plan storage 49, and a plan output module 50.

In FIG. 21, the server 10 of FIG. 2 includes the apparatus to make a production plan of recycled materials and a production plan of products utilizing recycled materials according to the present invention. The apparatus includes storages 40 to 47, a calculation module 48, a plan storage 49, and a plan output module 50. In the apparatus, the storage 40 has stored the lower limit value (80% in FIG. 7) of the recycled material utilization ratio β described by referring to FIG. 7. The storage 41 has stored the raw material constitution of the collected used products 17 as shown in (a) and (b) of FIG. 7. The storage 42 has stored the raw material constitution of the products utilizing recycled materials 18 as shown in (a) and (c) of FIG. 7. The storage 43 has stored the lower limit value (20% in FIG. 19) of the recycled material utilization ratio β. The storage 44 has stored the upper limit value (40% in FIG. 19) of the recycled material utilization ratio β. The information items respectively stored in the storages 40 to 44 are inputted from an input device, not shown.

The storage 45 stores the predicted supply amount of raw materials to the recycle process 6 as shown in FIG. 10. The predicted supply amount corresponds to the disassembly amount 24/25 and is supplied from the collection/disassembly PC 14/15 (FIG. 2). The storage 46 stores the production plan of products utilizing recycled materials in the production process 1. The production plan corresponds to the monthly product quantity 21 of the production process 1 and is supplied from the production PC 11 (FIG. 2).

On the basis of the information items stored in the storages 40 to 46, the calculation module 48 calculates the allotted ratio η of use of raw materials which should be loaded by the products utilizing recycled materials 18 and the production plan of recycled materials in the recycle process 6 as described in conjunction with FIG. 7. The calculation module 48 then stores the allotted ratio η in the storage 48 and the production plan of recycled materials in the plan storage 49. The production plan in the storage 49 corresponds to the monthly recycled material amount 26 of the recycle process 6 and is sent from the plan output module 50 to the recycle PC 16 and the production PC 11 (FIG. 2).

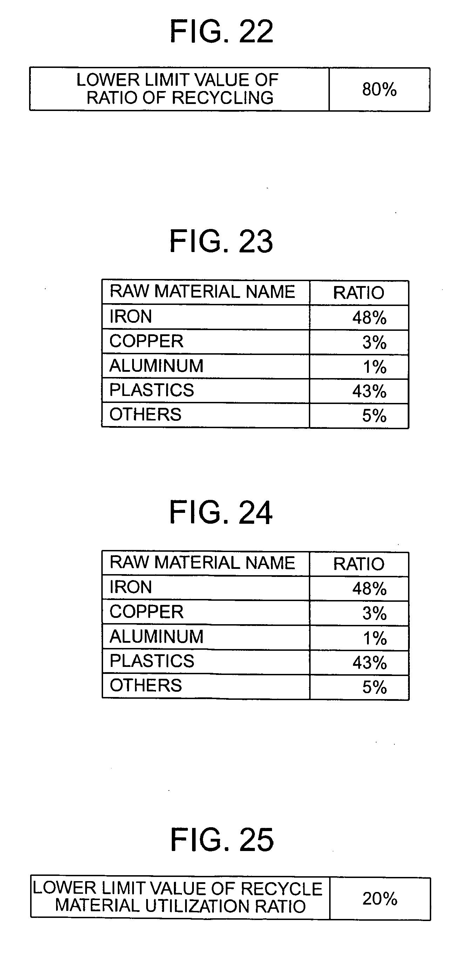

FIG. 22 is a diagram showing a data layout of the information stored in the storage 40 of FIG. 21. The data layout includes an item "lower limit value of the ratio of recycling α" and its value. In this case, the lower limit value of the ratio of recycling α is set to 80% according to the example of (b) of FIG. 7.

FIG. 23 is a diagram showing a data layout of the information stored in the storage 41 of FIG. 21. The data layout includes items "raw material name" and "constitution ratio". As can be seen in FIG. 23, the constitution ratio is set for each raw material name. In this example, the raw material names and the constitution ratios thereof are set according to (a) and (b) of FIG. 7.

FIG. 24 is a diagram showing a data layout of the information stored in the storage 42 of FIG. 21. The data layout includes items "raw material name" and "constitution ratio". As can be seen in FIG. 24, the constitution ratio is set for each raw material name. In this example, the raw material names and the constitution ratios thereof are set according to (a) and (c) of FIG. 7.

FIG. 25 is a diagram showing a data layout of the information stored in the storage 43 of FIG. 21. The data layout includes an item "lower limit value of recycled material utilization ratio" and its value. In this example, the lower limit value of recycled material utilization ratio β is set to 20% according to the example of FIG. 19.

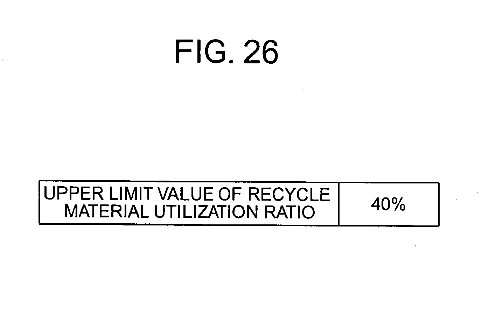

FIG. 26 is a diagram showing a data layout of the information stored in the storage 44 of FIG. 21. The data layout includes an item "upper limit value of recycled material utilization ratio" and its value. In this example, the upper limit value of recycled material utilization ratio β is set to 40% according to the example of FIG. 19.

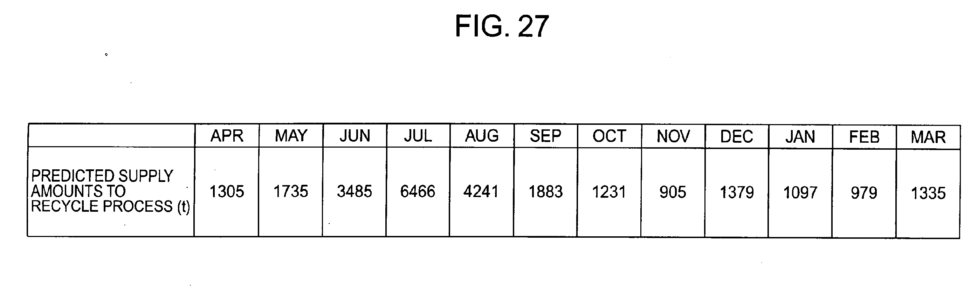

FIG. 27 is a diagram showing a data layout of the information stored in the storage 45 of FIG. 21. In this example, data items of monthly predicted supply amounts of raw materials to the recycle process 6 are stored in the storage 45 according to the example of FIG. 19.

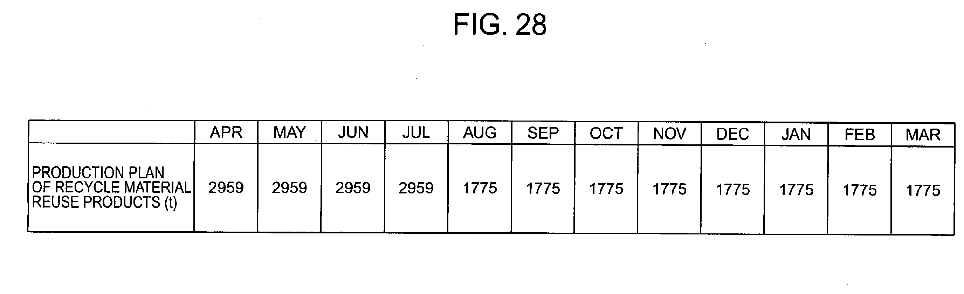

FIG. 28 is a diagram showing a data layout of the information stored in the storage 46 of FIG. 21. The production plan of products utilizing recycled materials of the production process 1 supplied from the production PC 11 (FIG. 2) is stored in the storage 46. The production plan corresponds to the monthly product quantity 21 of the production process 1.

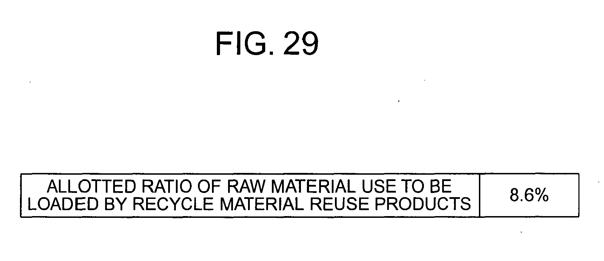

FIG. 29 is a diagram showing a data layout of the information stored in the storage 47 of FIG. 21. The allotted ratio η of use of raw materials which should be loaded by the products utilizing recycled materials (8.6% in FIG. 7) calculated in the calculation module 48 of FIG. 21 is stored in the storage 47.

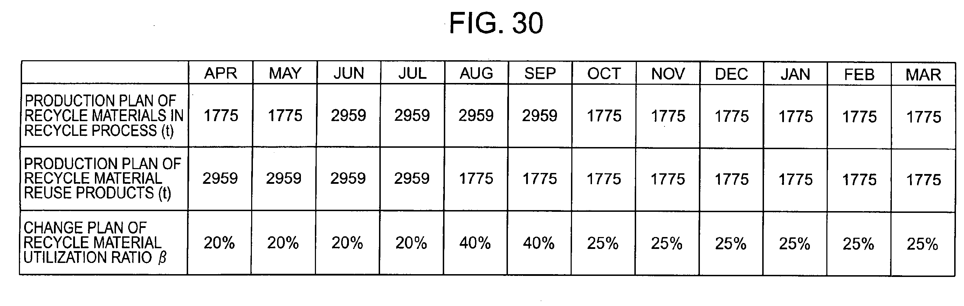

FIG. 30 is a diagram showing a data layout of the information stored in the storage 49 of FIG. 21. The production plan of recycled materials of recycle process 6 calculated in the calculation module 48 is stored in the storage 49 together with the monthly product quantity 21 of the production process 1 and the change plan of the monthly recycled material utilization ratio β.

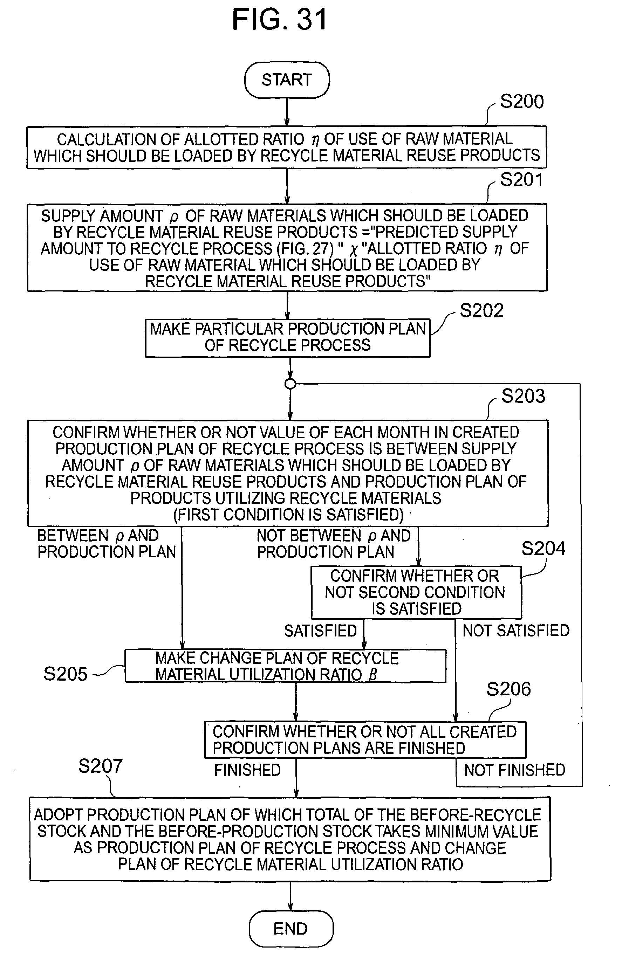

FIG. 31 is a flowchart showing, in the form of a processing procedure of the calculation module 48 of FIG. 21, an embodiment of a method of making a production plan of recycled materials and a production plan of products utilizing recycled materials according to the present invention.

In the flowchart, the calculation module 48 calculates the allotted ratio η of raw material use which should be loaded by the products utilizing recycled materials (step S200). The calculation is conducted as described in conjunction with FIG. 7. The allotted ratio η is associated with the recycled material utilization ratio β. For example, if the lower limit value of the recycled material utilization ratio β stored in the storage 43 is 20% and the upper limit value of the recycled material utilization ratio β stored in the storage 44 is 40% as shown in FIG. 19 for the collected used products 17 and the products utilizing recycled materials 18 shown in FIG. 7, the allotted ratio η is 8.6% for the lower limit value "20%" of the recycled material utilization ratio β stored in the storage 43 and is 43% x 0.4 = 17.2% for the upper limit value "40%".

Next, the calculation module 48 multiplies the predicted supply amount (FIG. 27) of raw materials to the recycle process 6 stored in the storage 45 by the allotted ratio η obtained in step S200 to calculate the supply amount ρ of raw materials which should be loaded by the products utilizing recycled materials (step S201). The supply amount ρ corresponds to the monthly disassembly amount 24/25 of the collection/disassembly process 4/5. The calculation module 48 makes a plurality of monthly production plans of recycled materials in the recycle process 6 (corresponding to the monthly recycled material amount 26; step S202). The makes a check to confirm for each month whether of not the recycled material amount in each production plan of the recycle process 6 made as above is between the supply amount ρ of raw materials which should be loaded by the products utilizing recycled materials obtained in step S201 and the production plan of products utilizing recycled materials (FIG. 28; corresponding to the monthly product quantity 21 of the production process 1) stored in the storage 46 (FIG. 11). In the confirmation, a case in which the recycled material amount is equal to either one of the supply amount ρ and the production plan is also included. That is, the calculation module 48 confirms whether or not the first condition is satisfied (step S203).

If the first condition is not satisfied, the calculation module 48 makes a check to confirm whether or not the second condition is satisfied (step S204). If the second condition is not satisfied either, the calculation module 48 confirms whether or not all production plans have been processed or finished (step S206). If this is not the case, control returns to a start point of step S203 to execute step S203 for another production plan of the recycle process 6. The processing of steps S203, S204, and S206 is repeatedly executed until the first or second condition is satisfied.

If the first condition is satisfied (step S203) or if the second condition is satisfied although the first condition is not satisfied (step S204), the calculation module 48 creates a change plan of the recycled material utilization ratio β (i.e., a production plan of products utilizing recycled materials; step S205) and then confirms whether or not all production plans have been finished (step S206). If there remains any production plan, control returns to a start point of step S203. If all production plans have been finished, the calculation module 48 selects, from the production plans thus created, a production plan of which the total of the before-recycle stock and the before-production stock takes the minimum value among the production plans to resultantly adopt the selected production plan as a change plan of the production plan of recycled materials and the recycled material utilization ratio β of the recycle process 6 (step S207) to thereby terminate the processing.

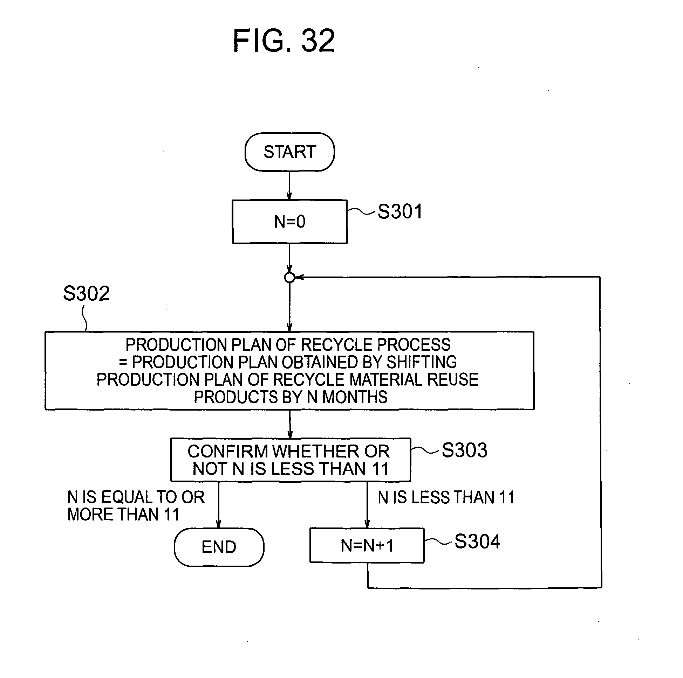

FIG. 32 is a flowchart showing a concrete example of step S202 of FIG. 31.

After the processing is terminated in step S201 of FIG. 31, the calculation module 48 sets "0" to variable N representing "month" (step S301). Next, the module 48 obtains the production plan of products utilizing recycled materials (FIG. 28) from the storage 46 of FIG. 21 to shift the production plan by N months (since N is zero, the result is the production plan itself in this situation) and then sets the production plan as the production plan of recycled materials of the recycle process 6 (step S302). The calculation module 48 then makes a check to confirm whether or not N is less than 11 (step S303). If N is less than 11, variable N is incremented by one (step S304) and then the process returns to a start point of step S302 for execution of step S302.

In step S302, the program again obtains the production plan of products utilizing recycled materials (FIG. 28) from the storage 46 of FIG. 21 to shift the production plan by N months (since N is one due to step S304, the result is the production plan shifted forward by one month in this situation) and then sets the production plan as the production plan of recycled materials of the recycle process 6 to thereafter increment variable N by one (step S304). Thereafter, the process returns to a start point of step S302).

Similarly, the processing of steps S302 to S304 is repeatedly executed until variable N is equal to or more than 11. When variable N is equal to or more than 11, the program terminates the processing (step S307).

The program determines, among the production plans created in step S202, the production plan which satisfies the first condition in step S203 or the second condition in step S204 and of which the total value of the before-recycle stock 33 and the before-production stock 34 for 12 months takes the minimum value as a result of creation of the change plan of the recycled material utilization ratio β in step S205. The product plan is stored as the product plan of recycled materials of the recycle process 6 in the plan storage 49 of FIG. 21. The product plan of recycled materials of the recycle process shown in FIG. 30 is a concrete example of numeric values for the product plan of recycled materials of the recycle process 6.

The plan storage 49 of FIG. 21 stores also the production plan of products utilizing recycled materials of FIG. 28 as shown in FIG. 30. The product plan of recycled materials of the recycle process 6 is obtained, as described in conjunction with FIG. 15, by shifting forward by two months the monthly recycled material amount 26 of the recycle process 6 adjusted to the monthly production quantity 21 of the production process 1 as described in conjunction with FIG. 13.

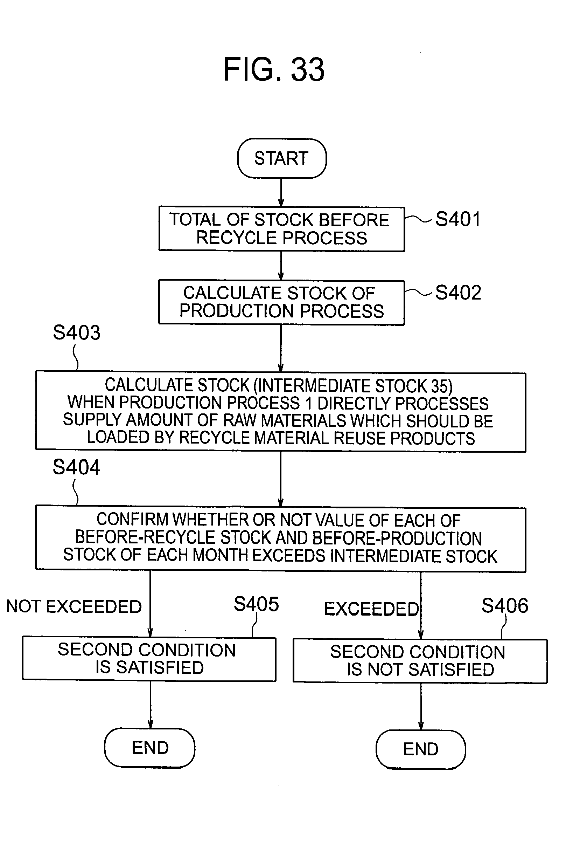

FIG. 33 is a flowchart showing a concrete example of step S204 of FIG. 31.

In this flowchart, the program first calculates the stock before the recycle process 6 (i.e., the before-recycle stock 33; step S401), the stock before the production process 1 (i.e., the before-production stock 34; step S402), and the stock when the production process 1 directly processes the supply amount of raw materials which should be loaded by products utilizing recycled materials (i.e., the intermediate stock 35 of FIG. 12; step S403).

Next, the program makes a check to determine whether or not the stock before the recycle process 6 (before-recycle stock 33) and the stock before the production process 1 (before-production stock 34) exceed the stock when the production process 1 directly processes the supply amount (intermediate stock 35) for each month (step S404). If none of the before-recycle stock 33 and the before-production stock 34 exceeds the intermediate stock 35, it is assumed that the second condition is satisfied (step S405) and then the process goes to step S205 of FIG. 31. Otherwise, it is assumed that the second condition is not satisfied (step S406) and then the process goes to step S202 of FIG. 31 to terminate the processing of step S204.

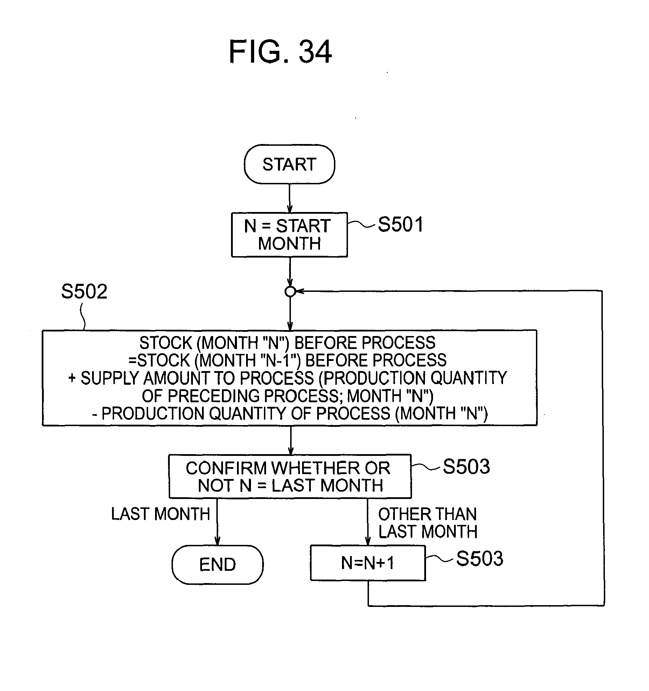

FIG. 34 is a flowchart showing concrete examples respectively of steps S401 to S403 of FIG. 33.

In FIG. 34, the program sets the start month to variable N (step S501). For example, in the case of FIG. 9, the start month is April and hence "April" is set to variable N, i.e., "April" = N.

Next, the program adds the supply amount to the preceding process (e.g., the collection/disassembly process 4/5 if the pertinent process is the recycle process 6) of the month "N" to the stock before the pertinent process of the month "N-1" (e.g., the before-recycle stock 33 in step S401 of FIG. 33). From the result of the addition, the program subtracts the production amount of the pertinent process (the recycled material amount of the month "N" if the pertinent process is the recycle process 6) of the month "N" to obtain the stock before the pertinent process of the month "N" (step S502).

The program confirms whether or not N is the last month (March in FIG. 9; step S503). If N is other than the last month, N is incremented by one (step S504) and then control returns to step S502 to execute again the processing for the next month beginning at step S502. If N is the last month, the stock calculation in steps S401 to S403 of FIG. 33 is finished.

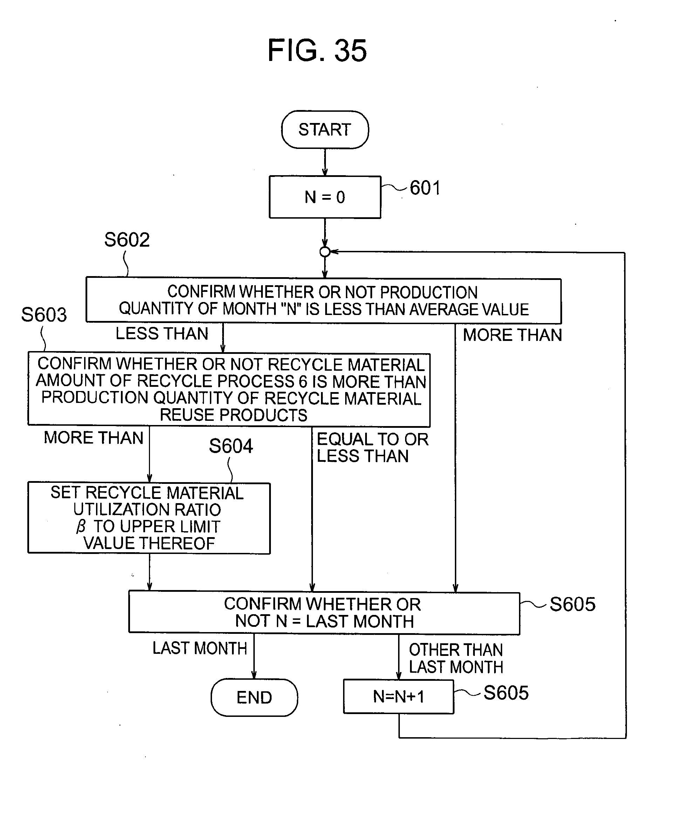

FIG. 35 is a flowchart showing a concrete example of step S205 of FIG. 31.

In the flowchart, the program sets the start month to variable N (April in the preceding examples; step S601). A check is made to determine whether or not the production quantity of the month "N" of the production process 1 is equal to or less than the average value of the monthly production quantity in the year (step S602). If the production quantity is equal to or less than the average value, a check is made to determine whether or not the recycled material amount of the recycle process 6 in the month "N" is more than the production quantity of products utilizing recycled materials of the production process 1 in the month "N" (step S603). If the recycled material amount is more than the production quantity, the recycled material utilization ratio β at this point of time is set as the upper limit value thereof (step S604) and the process goes to step S605. Otherwise, the process goes to step S605 with the recycled material utilization ratio β kept unchanged. If the production quantity is more than the average value in step S602, the process goes to step S605.

In step S605, a check is made to determine whether or not variable N indicates the last month (March in the preceding examples; step S325). If variable N is other than the last month, variable N is incremented by one (step S326). The process returns to step S602 to execute again the processing for the next month beginning at step S602. The above processing is repeatedly executed until variable N is the last month. When variable N is the last month, the recycled material utilization ratio β is determined for each month and the change production of the recycled material utilization ratio β is obtained.

As described in conjunction with FIGS. 19 and 20, in contrast with the production plan of recycled materials of recycle process 6 and that of products utilizing recycled materials of the production process 1 obtained in step S203 of FIG. 31, the change plan of the recycled material utilization ratio β determines the recycled material utilization ratio β of each month in the production process 1 to reduce the before-production stock 34 of the production process 1. The change plan of the recycled material utilization ratio β of FIG. 30 concretely and numerically shows the change plan of the recycled material utilization ratio β obtained as above. The change plan is stored in the plan storage 49 of FIG. 21.

The recycled material utilization ratio β of FIG. 30 obtained as above is set to the upper limit value of 40% in August and September in which the production plan of recycled materials of the recycle process 6 is more than that of products utilizing recycled materials of the production process 1 as described in conjunction with FIGS. 19 and 20. In other months, the ratio β is set to a low value, namely, the lower limit value of 20% or 25%. As a result, the before-production stock 34 of the production process 1 can be reduced as described by referring to FIGS. 19 and 20.

Description has been given of an embodiment of a method of creating a production plan of recycled materials and a production plan of products utilizing recycled materials (a change plan of the recycled material utilization ratio β) according to the present invention. It is also possible according to the present invention to calculate the predicted ratio of recycling α of the year using collection results and recycled material production results at an appropriate point of the year, predicted collection amounts and predicted demand for products after the point of the year, and production plans of recycled materials and production plans of products utilizing recycled materials in the future. According to the predicted ratio of recycling α, a warning message may also be issued, for example, "it is not possible to obtain the ratio of recycling α stipulated by the law".

It should be further understood by those skilled in the art that although the foregoing description has been made on embodiments of the invention, the invention is not limited thereto and various changes and modifications may be made without departing from the spirit of the invention and the scope of the appended claims.

## Claims

1. A method of making a production plan of recycled materials in a recycle process (6) treating raw materials of collected used products in which a lower limit value (FIG. 22) of a ratio of recycling (α) indicating a ratio of raw materials to be recycled as recycled materials to the raw materials of collected used products is determined in advance and in which raw materials of collected used products supplied from a collection/disassembly process (4/5) are recycled, comprising the step of
making a production plan of the recycled materials in which a recycled material amount (26) of recycled materials produced in the recycle process is equal for each month to either one of a disassembly amount (24/25) of the collected used products disassembled in the collection/disassembly process and a planed production quantity (21) of products utilizing recycled materials in a production process (1) or between the disassembly amount of the collected used products and the planed production quantity.

2. A method of making a production plan of recycled materials according to claim 1, wherein the recycled material amount of the recycle process is equal for each month to the production quantity of products utilizing recycled materials in the production process.

3. A method of making a production plan of recycled materials according to claim 1, wherein the disassembly amount of the collected used products disassembled in the collection/disassembly process is a supply amount (ρ) of raw materials which should be loaded by products utilizing recycled materials,
the supply amount of raw materials being obtained from a predicted supply amount of raw materials supplied from the collection/disassembly process to the recycle process,
the supply amount having a ratio to the predicted supply amount, the ratio being determined by the lower limit value of the ratio of recycling.

4. A method of making a production plan of recycled materials in a recycle process (6) treating raw materials of collected used products in which a lower limit value (FIG. 22) of a ratio of recycling (α) indicating a ratio of raw materials to be recycled as recycled materials to the raw materials of collected used products is determined in advance and in which raw materials of collected used products supplied from a collection/disassembly process (4/5) are recycled (FIGS. 31-35), comprising:
a first calculation step of calculating a monthly stock amount of raw materials before recycle in the recycle process;
a second calculation step of calculating a monthly stock amount of recycled materials before use for recycled materials reuse products in a production process of the recycled materials reuse products;
a third calculation step of calculating a monthly stock amount of raw materials before use for the recycled materials reuse products in the production process when the collection/disassembly process is directly coupled with the production process; and
a plan making step of making a plan of monthly production quantity of recycled materials in the recycle process in which none of the monthly stock amount of raw materials obtained in the first calculation step and the monthly stock amount of recycled materials obtained in the second calculation step exceeds the monthly stock amount of raw materials obtained in the third calculation step,
the plan made in the plan making step being the production plan of recycled materials of the recycle process.

5. A method of making a production plan of recycled materials according to claim 4, wherein the production plan made in the plan making step is a production plan in which a peak month of the recycled material amount according to the production plan is adjusted to a peak month of the recycled material amount in the collection/disassembly process (FIGS. 15 and 17).

6. A method of making a production plan of recycled materials in a recycle process (6) in which a lower limit value (FIG. 25) and an upper limit value (FIG. 26) of a recycled material utilization ratio (β) in products produced by a production process (1) are determined in advance (FIGS. 31-35), comprising:
a first creation step of creating a plan of a monthly production quantity of products utilizing recycled materials in the production process;
a first detection step of detecting a month in which the monthly production quantity of products produced in the production process is small;
a second detection step of detecting, from the months detected in the first detection step, a month in which the monthly production quantity is less than the recycled material amount of the recycle process; and
a second creation step for creating a change plan of the recycled material utilization ratio;
the recycled material utilization ratio being the upper limit value in the month of the production quantity detected in the second detection step,
the recycled material utilization ratio being the lower limit value or between the lower limit value and the upper limit value in other than the month detected in the second detection step,
the production plan of products utilizing recycled materials including the plan of the monthly production quantity created in the first creation step and the change plan created in the second creation step.

7. An apparatus for making a production plan of recycled materials, comprising:
first means (40) for storing a predetermined lower limit value of a ratio of recycling (α);
second means (41) for storing raw material constitution of raw materials of collected used products;
third means (42) for storing raw material constitution of raw materials of products utilizing recycled materials utilizing recycled materials;
fourth means (43) for storing a lower limit value of a recycled material utilization ratio of products utilizing recycled materials utilizing recycled materials;
fifth means (48) for calculating an allotted ratio (η) of use of raw materials which should be loaded by the products utilizing recycled materials to observe the lower limit value of the ratio of recycling, by use of the lower limit value of the ratio of recycling in the first means, the raw material constitution of raw materials of collected used products in the second means, the raw material constitution of raw materials of products utilizing recycled materials in the third means, and the lower limit value of the recycled material utilization ratio in the fourth means;
sixth means (47) for storing the allotted ratio of use of raw materials obtained in the fifth means;
seventh means (45) for storing a predicted supply amount of raw materials to a recycle process;
eighth means (46) for storing a production plan of the products utilizing recycled materials in a production process;
ninth means (48) for calculating a production plan of the recycle process by use of a supply amount of raw materials which should be loaded by the products utilizing recycled materials obtained by multiplying the predicted supply amount of the raw materials stored in the seventh means by the allotted ratio (η) of use of raw materials stored in the sixth means and the production plan of products utilizing recycled materials, the production plan thus calculated minimizing a total of a stock of raw materials before recycle in the recycle process and a stock of recycled materials before the recycled materials are used for the products utilizing recycled materials in the production process;
tenth means (49) for storing the production plan of the recycle process obtained in the ninth means; and
means (50) for outputting the production plan of the recycle process stored in the tenth means.

8. An apparatus for making a production plan of products utilizing recycled materials, comprising:
first means (43, 44) for storing a lower limit value and an upper limit value of a recycled material utilization ratio (β) of products utilizing predetermined recycled materials;
second means (49) for storing a production plan of recycled materials of a recycle process;
third means (49) for storing a production plan of products utilizing recycled materials in a production process;
fourth means (48) for calculating a change plan of the recycled material utilization ratio, the change plan minimizing a stock between the recycle process and the production process, by use of the lower limit value and the upper limit value in the first means, the production plan of the recycle process in the second means, and the production plan of products utilizing recycled materials in the third means;
fifth means (49) for storing the change plan obtained in the fourth means; and
sixth means (50) for outputting a production plan of products utilizing recycled materials including the change plan stored in the fifth means.

9. An apparatus for making a production plan of recycled materials and a production plan of products utilizing recycled materials, comprising:
first means (40) for storing a predetermined lower limit value of a ratio of recycling (α);
second means (41) for storing raw material constitution of raw materials of collected used products;
third means (42) for storing raw material constitution of raw materials of products utilizing recycled materials using recycled materials;
fourth means (43) for storing a predetermined lower limit value and a predetermined upper limit value of a recycled material utilization ratio of the products utilizing recycled materials;
fifth means (48) for calculating an allotted ratio (η) of use of raw materials which should be loaded by the products utilizing recycled materials to observe the lower limit value of the ratio of recycling, by use of the lower limit value of the ratio of recycling in the first means, the raw material constitution of raw materials of collected used products in the second means, the raw material constitution of raw materials of products utilizing recycled materials in the third means, and the lower limit value of the recycled material utilization ratio in the fourth means;
sixth means (47) for storing the allotted ratio of use of raw materials obtained by the fifth means;
seventh means (45) for storing a predicted supply amount of raw materials to a recycle process;
eighth means (46) for storing a production plan of the products utilizing recycled materials;
ninth means (48) for calculating a production plan of the recycle process by use of a supply amount of raw materials which should be loaded by the products utilizing recycled materials obtained by multiplying the predicted supply amount to the recycle process in the seventh means by the allotted ratio (η) of use of raw materials stored in the sixth means and the production plan of products utilizing recycled materials in the eighth means, the production plan thus calculated minimizing a total of a stock of raw materials before recycle in the recycle process and a stock of recycled materials before the recycled materials are used for the products utilizing recycled materials in the production process;
tenth means (48) for calculating a change plan of the recycled material utilization ratio, the change plan minimizing a stock between the recycle process and the production process, by use of the production plan of the recycle process obtained in the ninth means, the production plan of products utilizing recycled materials in the eighth means, and the lower limit value and the upper limit value in the fourth means;
11th means (49) for storing a production plan of products utilizing recycled materials including the production plan of the recycle process obtained in the ninth means and the change plan of the recycled material utilization ratio obtained in the tenth means; and
means (50) for outputting the production plan of the products utilizing recycled materials in the 11th means.
